(19) Europäisches Patentamt
European Patent Office
Office européen des brevets

(11) **EP 4 397 708 A1**

(12) **EUROPEAN PATENT APPLICATION**
published in accordance with Art. 153(4) EPC

(43) Date of publication:
**10.07.2024 Bulletin 2024/28**

(21) Application number: **22864491.0**

(22) Date of filing: **29.08.2022**

(51) International Patent Classification (IPC):
**C08L 33/02** (2006.01)  **C03C 27/12** (2006.01)
**C08F 220/06** (2006.01)  **C08J 5/18** (2006.01)
**C08K 5/05** (2006.01)  **C08K 5/20** (2006.01)

(52) Cooperative Patent Classification (CPC):
**B32B 17/00; C08F 220/06; C08J 5/18; C08K 5/05;
C08K 5/20; C08L 33/02**

(86) International application number:
**PCT/JP2022/032387**

(87) International publication number:
**WO 2023/032909 (09.03.2023 Gazette 2023/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.08.2021 JP 2021139822**

(71) Applicant: **Kuraray Europe GmbH
65795 Hattersheim am Main (DE)**

(72) Inventors:
• **NIIMURA, Takuro
Tsukuba-shi, Ibaraki 305-0841 (JP)**
• **TAKEMOTO, Kenta
Tsukuba-shi, Ibaraki 305-0841 (JP)**
• **NAKAHARA, Atsuhiro
Tsukuba-shi, Ibaraki 305-0841 (JP)**
• **ASANUMA, Yoshiaki
Kurashiki-shi, Okayama 713-8550 (JP)**

(74) Representative: **Müller-Boré & Partner
Patentanwälte PartG mbB
Friedenheimer Brücke 21
80639 München (DE)**

(54) **IONOMER RESIN COMPOSITION, RESIN SHEET, AND LAMINATED GLASS**

(57) The present invention relates to an ionomer resin composition that includes an ionomer resin including a (meth)acrylic acid unit (A), a (meth)acrylic acid neutralized product unit (B), and an ethylene unit (C); and a component Y selected from the group consisting of compounds having a hydroxy group and/or an amide group, modified products thereof, and a mixture of these. The total content of the units (A) and the units (B) is 6-10 mol% in terms of the total monomer units constituting the ionomer resin and the content of the component Y is 0.01-2000 mass ppm (inclusive).

EP 4 397 708 A1

**Description**

**TECHNICAL FIELD**

The present patent application claims priority under the Paris Convention to Japanese Patent Application No. 2021-139822 (filing date: August 30, 2021), the contents of which are incorporated herein in its entirety by reference.
The present invention relates to an ionomer resin composition and a method for producing the same, a resin sheet including the ionomer resin composition, a laminated glass interlayer film including the resin sheet, and a laminated glass having the laminated glass interlayer film.

**BACKGROUND ART**

Ionomers, which are neutralized products of ethylene-unsaturated carboxylic acid copolymers, are used in interlayer films for laminated glass because they have excellent transparency and adhesion to glass (for example, Patent Document 1). In recent years, the performance requirements for laminated glass have become higher, and ionomer resins are also required to maintain high transparency regardless of the manufacturing conditions of laminated glass, and to have less coloration and better appearance.
For example, Patent Document 2 teaches an ionomers that is a neutralization products of an ethylene acid copolymer including a copolymerized unit of ethylene, a copolymerized unit of a first $\alpha,\beta$-unsaturated carboxylic acid having 3 to 10 carbon atoms, and a copolymerized unit of a derivative of a second $\alpha,\beta$-unsaturated carboxylic acid having 3 to 10 carbon atoms.

**PRIOR ART DOCUMENTS**

**PATENT DOCUMENTS**

[Patent Document 1] US Patent No. 6432522 Specification
[Patent Document 2] Japanese Unexamined Patent Application Publication No. 2017-519083 (Translation of PCT Application)

**SUMMARY OF INVENTION**

**PROBLEM TO BE SOLVED BY INVENTION**

Patent Document 2 teaches that the ionomer resin taught therein exhibits improved optical properties (haze) compared to conventional ionomer resins. However, according to studies by the present inventors, ionomer resins such as that in Patent Document 2 do not have sufficient coloration resistance and creep resistance, are easily colored during molding, and have a tendency to decrease in strength during long-term use.
Therefore, an object of the present invention is to provide an ionomer resin composition capable of forming a resin sheet having excellent transparency, coloration resistance, and creep resistance, and a method for producing the same.

**MEANS FOR SOLVING PROBLEM**

The present inventors have arrived at the present invention as a result of intensive studies to solve the foregoing problems. That is, the present invention provides the following preferred aspects.

[1] An ionomer resin composition, including:

an ionomer resin that includes a (meth)acrylic acid unit (A), a neutralized (meth)acrylic acid unit (B), and an ethylene unit (C); and
a component Y selected from the group consisting of compounds that have a hydroxyl group and/or an amide group, modified products thereof, and mixtures thereof;
the total content of the unit (A) and the unit (B) being 6 to 10 mol% on the basis of all monomer units that constitute the ionomer resin, and the content of the component Y being 0.01 to 2000 mass ppm.

[2] The ionomer resin composition of [1], wherein the ionomer resin further includes a (meth)acrylic acid ester unit (D), the total content of the unit (A), the unit (B), and the unit (D) being 6 to 10 mol% on the basis of all the monomer units that constitute the ionomer resin.

[3] The ionomer resin composition of [1] or [2], wherein the compound that has a hydroxyl group and/or an amide group is at least one compound that is selected from among phenol compounds, fatty acid amides, inorganic substances that have a hydroxyl group or an amide group, and modified products thereof.

[4] The ionomer resin composition of [3], wherein the total content of the phenol compound and the modified product thereof is 0.01 to 100 mass ppm, the total content of the fatty acid amide and the modified product thereof is 0.01 to 2000 mass ppm, and/or the content of the inorganic substance that has a hydroxyl group and/or an amide group is 0.01 to 2000 mass ppm.

[5] The ionomer resin composition of [3] or [4], wherein

the phenol compound is selected from among 6-tert-butyl-2,4-xylenol, 4-methoxyphenol, 1,4-dihydroxybenzene, 3,5-di-tert-butyl-4-hydroxybenzaldehyde, and 2,6-di-tert-butyl -p-cresol;
the fatty acid amide is selected from among erucamide, oleamide, stearamide, behenamide, ethylene bis stearamide, ethylene bis capramide, and ethylene bis oleamide; and/or
the inorganic substance that has a hydroxyl group and/or an amide group is selected from among talc, modified calcium carbonate, silica, modified alumina, and kaolin.

[6] A method for producing the ionomer resin composition of any of [1] to [5], the method including

i) a step of dissolving an ethylene-(meth)acrylic acid ester copolymer in an organic solvent,
ii) a step of saponifying the copolymer, and
iii) a step of demetallizing at least a portion of the saponification product that is obtained at step ii),

at least one step among steps i) to iii) being performed in the presence of $1.0 \times 10^{-6}$ to 1. 0 parts by mass of the component Y relative to 100 parts by mass of the copolymer.

[7] A resin sheet having one or more layers that include the ionomer resin composition of any of [1] to [5].

[8] A laminated glass interlayer film composed of the resin sheet of [7].

[9] A laminated glass having two glass sheets and the laminated glass interlayer film of [8], the film being disposed between the two glass sheets.

## EFFECT OF INVENTION

According to the present invention, it is possible to provide an ionomer resin composition capable of forming a resin sheet having excellent transparency, coloration resistance, and creep resistance, and a method for producing the same.

## EMBODIMENT OF INVENTION

Embodiments of the present invention will be described in detail below. Note that the scope of the present invention is not limited to the embodiments described here, and various changes can be made without departing from the spirit of the present invention.

[Ionomer Resin Composition]

The ionomer resin composition of the present invention contains an ionomer resin and a component Y selected from the group consisting of compounds having a hydroxyl group and/or an amide group, modified products thereof, and mixtures thereof, and the content of the component Y is 0.01 mass ppm or more and 2000 mass ppm or less.

<Component Y>

When the ionomer resin is too highly crystalline, it tends to whiten and have reduced transparency, and when a resin sheet containing the ionomer resin is slowly cooled after being treated at high temperature, crystallization of the ionomer resin contained in the resin sheet is promoted, and the transparency of the resin sheet tends to decrease. Therefore, for example, when a resin sheet containing an ionomer resin is used as a laminated glass interlayer film in a laminated glass manufactured by a method that includes a process of treating at high temperature and then slow cooling, the design and appearance of the resulting laminated glass may be impaired. Therefore, upon investigating the transparency of a resin sheet containing an ionomer resin, the present inventors discovered that, surprisingly, by adding a component Y to the ionomer resin to prepare an ionomer resin composition having a content of the component Y of 0.01 mass ppm or more and 2000 mass ppm or less is prepared, a resin sheet having excellent transparency even during slow cooling can be obtained from the resin composition. It is not clear why the transparency of the resulting resin sheet, especially the transparency during slow cooling, is improved by containing 0.01 mass ppm or more and 2000 mass ppm or less of the component Y, but this is presumed to be because, due to interaction between the ionomer resin and the component Y, the component Y acts as a crystallization inhibitor of the ionomer resin due to the interaction, and the crystallinity of the ionomer resin is controlled within a range that does not impair transparency even during slow cooling.

Also, the present inventors have discovered that, surprisingly, a resin sheet obtained from an ionomer resin composition containing the ionomer resin and 0.01 mass ppm or more and 2000 mass ppm or less of the component Y has excellent coloration resistance and creep resistance. Normally, resin sheets obtained from resin compositions obtained by adding components other than the ionomer resin to the ionomer resin tend to have poor coloration resistance and creep resistance, but resin sheets obtained from the ionomer resin composition of the present invention surprisingly have excellent coloration resistance and creep resistance, are resistant to coloration during thermoforming, and readily maintain high strength even during long-term use.

Conversely, when the content of the component Y in the ionomer resin composition is outside the foregoing range, the resulting resin sheet tends to have lower transparency, coloration resistance, and creep resistance. When the content of the component Y is less than 0.01 ppm by mass, the transparency of the resulting resin sheet, especially the transparency during slow cooling, tends to decrease; for example, when the resulting resin sheet is used as a laminated glass interlayer film, the design and appearance of the laminated glass may be impaired. Furthermore, when the content amount of the component Y exceeds 2000 mass ppm, the coloration resistance of the resulting resin sheet tends to decrease; for example, when the resulting resin sheet is used as a laminated glass interlayer film, the design and appearance of the laminated glass may be impaired. Also, when the content of the component Y exceeds 2000 ppm by mass, the creep resistance of the resulting resin sheet tends to decrease, and thus, for example, when using the resulting resin sheet as a laminated glass interlayer film, strength during long-term use tends to decrease, and safety may be impaired.

From the perspective of being able to easily improve transparency, the content of the component Y in the ionomer resin composition of the present invention is preferably 0.01 mass ppm or more, more preferably 0.05 mass ppm or more, even more preferably 0.1 mass ppm or more, and further preferably 0.5 ppm by mass or more. Furthermore, the content of the component Y is preferably 1000 mass ppm or less, more preferably 200 mass ppm or less, even more preferably 100 mass ppm or less, further preferably 50 mass ppm or less, and particularly preferably 10 mass ppm or less. The content of the component Y in the ionomer resin composition can be determined by gas chromatography or the like and can be calculated, for example, by the method described in the examples.

The component Y is selected from the group consisting of compounds that have a hydroxyl group and/or an amide group, modified products thereof, and mixtures thereof. These may be used alone or in combination of two or more. The compound having a hydroxyl group and/or an amide group may be an organic compound or an inorganic substance, and such may be a compound having only one of a hydroxyl group and an amide group or may be a compound having both.

Organic compounds having a hydroxyl group and modified products thereof are not particularly limited and include, for example, phenol compounds, alcohols, silanol compounds, and modified products thereof. Note that modified products of organic compounds having hydroxyl groups include dimers, trimers, tetramers, oxides, decomposition products, and the like modified by multimerization, oxidation, decomposition, and the like of organic compounds having hydroxyl groups. When the organic compound before modification has a hydroxyl group, it is included in "modified products of an organic compound having a hydroxyl group" in the present Specification. Therefore, for example, compounds obtained by the foregoing modification of 2,6-di-tert-butyl-p-cresol, 1,4-dihydroxybenzene and 1,2- dihydroxybenzene, which are organic compounds having a hydroxyl group, such as 3,3',5,5'-tetra-tert-butyl-4,4'-stilbenequinone, 3,3',5,5'-tetra-tert-butyl-4,4'-diphenoquinone, 1,4-benzoquinone, and 1,2-benzoquinone, are included in the modified products of organic compounds having a hydroxyl group in the present Specification. These modified products may be used alone or in combination of two or more.

Examples of phenol compounds include monophenol compounds, bisphenol compounds, and the like. Examples of monophenol compounds include 6-tert-butyl-2,4-xylenol, 4-methoxyphenol, 1,4-dihydroxybenzene, 3,5-di-tert-butyl-4-hydroxybenzaldehyde., 2,6-di-tert-butyl-p-cresol, 2,5-di-tert-butylphenol, mono-, di-, or tri($\alpha$-methylbenzyl)phenol, hydroquinone monomethyl ether, and the like. Examples of bisphenol compounds include 2,2'-methylenebis(4-ethyl-6-t-butylphenol), 4,4'-butylidenebis(3-methyl-6-t-butylphenol), and 4,4'-thiobis(3-methyl-6-t-butylphenol). These may be used alone or in combination of two or more.

Examples of alcohols include higher alcohols having 16 or more carbon atoms, such as cetyl alcohol and stearyl alcohol.

Examples of silanol compounds include silanol, methylsilanol, dimethylsilanol, trimethylsilanol, triethylsilanol, tri-tert-butoxysilanol, dimethylphenylsilanol, and the like.

Among these, from the perspective of easily improving transparency, coloration resistance, and creep resistance of the resulting resin sheet, phenol compounds and modified products thereof are preferable, monophenol compounds and modified products thereof are more preferable, and compounds selected from 6-tert-butyl-2,4-xylenol, 4-methoxyphenol, 1,4-dihydroxybenzene, 3,5-di-tert-butyl-4-hydroxybenzaldehyde, 2,6-di-tert-butyl-p-cresol, and modified products are more preferable.

In one embodiment of the present invention, the organic compound having a hydroxyl group is preferably a compound that does not contain a triazine structure or a benzotriazole structure, from the perspective of coloration resistance.

When an organic compound having a hydroxyl group or a modified product thereof, preferably a phenol compound or a modified product thereof, is contained in the ionomer resin composition, from the perspective of easily improving transparency, the total content is preferably 0.01 mass ppm or more, more preferably 0.05 mass ppm or more, more preferably 0.5 mass ppm or more, and more preferably 0.1 mass ppm or more. Furthermore, from the perspective of easily improving coloration resistance and creep resistance, the total content is preferably 100 mass ppm or less, more preferably 50 mass ppm or less, even more preferably 30 mass ppm or less, further preferably 20 ppm or less, particularly preferably 10 mass ppm or less, particularly more preferably 5 mass ppm or less, and particularly further preferably 1 mass ppm or less.

The organic compound having an amide group or modified product thereof are not particularly limited, and include, for example, fatty acid amide, phosphoramide, sulfonamide, and modified products thereof. Note that modified products of organic compounds having an amide group include dimers, trimers, tetramers, oxides, decomposition products, and the like thereof. Among these, fatty acid amides and modified products thereof are preferable from the perspective of easily improving the transparency, coloration resistance, and creep resistance of the resulting resin sheet. The fatty acid amide is not particularly limited and may be a saturated fatty acid amide or an unsaturated fatty acid amide, for example, higher fatty acid amides having 16 or more carbon atoms, such as erucamide, oleamide, stearamide, behenamide, ethylene bisstearamide, ethylene biscapramide and ethylene bisoleamide. These may be used alone or in combination of two or more.

Among these, saturated fatty acid amides are preferable, and stearamide and ethylene bisstearamide are more preferable, from the perspective of easily improving the transparency, coloration resistance, and creep resistance of the resulting resin sheet.

When an organic compound having an amide group or a modified product thereof, preferably a fatty acid amide or a modified product thereof, is contained in the ionomer resin composition, from the perspective of easily improving transparency, the total content is preferably 0.01 mass ppm or more, more preferably 0.05 mass ppm or more, even more preferably 0.1 mass ppm or more, even more preferably 0.5 mass ppm or more, particularly preferably 1 mass ppm or more, and particularly more preferably 10 mass ppm or more. Furthermore, from the perspective of easily improving coloration resistance and creep resistance, this is preferably 2000 mass ppm or less, more preferably 1000 mass ppm or less, even more preferably 500 mass ppm or less, further preferably 100 mass ppm or less, and particularly preferably 50 mass ppm or less.

In the present invention, the inorganic substance having a hydroxyl group and/or an amide group need only have a hydroxyl group and/or an amide group on the surface of the inorganic substance, and examples thereof include inorganic substances modified by surface treatment and given a hydroxyl group and/or an amide group. The inorganic substance is not particularly limited, and examples thereof include talc, calcium carbonate, silica, alumina, kaolin, calcium sulfate, magnesium sulfate, barium sulfate, silicon dioxide, silicon oxide, and the like. These may be used alone or in combination of two or more. Among these inorganic substances, from the perspective of easily improving the transparency, coloration resistance, and creep resistance of the resulting resin sheet, talc, calcium carbonate, silica, alumina, and kaolin are preferable, and the inorganic substance having a hydroxyl group and/or an amide group is preferably selected from talc, modified calcium carbonate, silica, modified alumina, and kaolin, and more preferably silica.

The surface treatment is not particularly limited as long as it can give a hydroxyl group and/or an amide group to the inorganic substance and may be, for example, silicone surface treatment using dimethyl silicone oil or the like, surface treatment using a trimethylsilyl group or the like, or the like.

In one embodiment of the present invention, from the perspective of easily improving transparency, the inorganic substance is preferably in a particulate form. From the perspective of easily improving transparency, the average particle diameter of the inorganic particles is preferably 10 $\mu$m or less, more preferably 5 $\mu$m or less, even more preferably 3 $\mu$m or less, particularly preferably 1 $\mu$m or less, and may be 0.001 $\mu$m or more. The average particle diameter of the inorganic particles can be measured by a dynamic light scattering method or a static light scattering method, for example, by the method described in the examples.

When an inorganic compound having a hydroxyl group and/or amide group is contained in the ionomer resin composition, from the perspective of easily improving transparency, the total content is preferably 0.01 mass ppm or more, preferably 0.05 mass ppm or more, more preferably 0.1 mass ppm or more, further preferably 0.5 mass ppm or more, even more preferably 1 mass ppm or more, and particularly preferably 10 mass ppm or more. Furthermore, from the perspective of easily improving coloration resistance and creep resistance, this is preferably 2000 mass ppm or less, more preferably 1000 mass ppm or less, even more preferably 500 mass ppm or less, further preferably 100 mass ppm or less, and particularly preferably 50 mass ppm or less.

<Ionomer Resin>

The ionomer resin in the present invention includes a (meth)acrylic acid unit (A), a neutralized (meth)acrylic acid unit (B), and an ethylene unit (C), and the total content of the unit (A) and the unit (B) is 6 to 10 mol% in relation to all monomer units constituting the ionomer resin.

In the present invention, the term "unit" means "derived structural unit"; for example, the term (meth)acrylic acid unit indicates a structural unit derived from (meth)acrylic acid, the term neutralized (meth)acrylic acid unit indicates a structural unit derived from a neutralized (meth)acrylic acid, and the term ethylene unit indicates a structural unit derived from ethylene. Moreover, in the present Specification, "(meth)acrylic acid" refers to methacrylic acid or acrylic acid.

When the total content of the unit (A) and the unit (B) is 6 to 10 mol% on the basis of all monomer units constituting the ionomer resin, it is easy to improve transparency of the resulting resin sheet, especially transparency during slow cooling, and self-supporting properties (for example, self-supporting properties in a high temperature environment) are easily improved. Conversely, when the total content is less than the foregoing lower limit value, crystallization of the ionomer resin tends to be promoted during slow cooling, and the transparency of the resulting resin sheet during slow cooling tends to decrease. Furthermore, when the foregoing total content exceeds the foregoing upper limit value, the self-supporting properties (for example, self-supporting properties in a high temperature environment) of the resulting resin sheet are less readily expressed.

From the perspective of easily improving the transparency of the resulting resin sheet (particularly the transparency during slow cooling) and the adhesion to a base material such as glass, the total content is 6 mol% or more, preferably 6.5 mol% or more, more preferably 7.0 mol% or more, and further preferably 7.5 mol% or more, and from the perspective of easily improving the self-supporting properties and moldability of the ionomer resin composition, 10 mol% or less, preferably 9.9 mol% or less, and more preferably 9.5 mol% or less.

The total content of the unit (A) and the unit (B) can be adjusted via the method for producing the ionomer resin. More specifically, when producing an ionomer resin by using an ethylene-(meth)acrylic acid ester copolymer as a raw material and using a method including a saponification reaction step and a demetallization reaction step of the copolymer, it can be adjusted according to reactivity (conversion rate) in various reactions that convert the ethylene-(meth)acrylic acid ester unit in the (meth)acrylic acid ester copolymer into the (meth)acrylic acid unit (A) and the neutralized (meth)acrylic acid unit (B) through the saponification reaction and demetallization reaction. Furthermore, as taught in US Patent No. 8399096, when ethylene and (meth)acrylic acid are used as raw materials and are polymerized to produce an ionomer resin, this can be adjust through the ratio of ethylene and (meth)acrylic acid to be copolymerized.

Examples of monomers constituting the (meth)acrylic acid unit (A) include acrylic acid and methacrylic acid, and methacrylic acid is preferable from the prospective of easily improving heat resistance and adhesion to substrates such as glass. These (meth)acrylic acid units may be used alone or in combination of two or more.

The content of the (meth)acrylic acid unit (A) in the ionomer resin is preferably 4.5 mol% or more on the basis of all monomer units constituting the ionomer resin, more preferably 5.0 mol% or more, further preferably 5.5 mol% or more, particularly preferably 5.8 mol% or more, as well as preferably 9.0 mol% or less, more preferably 8.5 mol% or less, further preferably 8.0 mol% or less, and particularly preferably 7.5 mol% or less. When the content of the unit (A) is equal to or greater than the foregoing lower limit value, the transparency of the resulting resin sheet and adhesiveness to a base material such as glass tend to improve. Moreover, when this is equal to or less than the foregoing upper limit value, the molding processability of the ionomer resin composition tends to improve.

A neutralized (meth)acrylic acid is that in which hydrogen ions of (meth)acrylic acid are replaced with a metal ion. As the neutralized (meth)acrylic acid unit (B), neutralized units of the (meth)acrylic acid unit (A) are preferable. Examples of the metal ions include ions of monovalent metals such as lithium, sodium, and potassium, and polyvalent metals such as magnesium, calcium, zinc, aluminum, and titanium. Such metal ions may be used alone or in combination of two or more. For example, one or more monovalent metal ions and one or more divalent metal ions may be combined.

The content of the neutralized (meth)acrylic acid unit (B) in the ionomer resin is preferably 0.65 mol% or more on the basis of all monomer units constituting the ionomer resin, more preferably 1.0 mol% or more, further preferably 1.5 mol% or more, particularly preferably 1.7 mol% or more, as well as preferably 3.0 mol% or less, more preferably 2.7 mol% or less, further preferably 2.6 mol% or less, and particularly preferably 2.5 mol% or less. When the content of the unit (B) is the foregoing lower limit or more, transparency and self-supporting properties (elastic modulus) are easily improved, and when this is the foregoing upper limit or less, it is easy to suppress increase in melt viscosity during molding.

Concerning the respective contents of the unit (A) and the unit (B), when producing an ionomer resin by using an ethylene-(meth)acrylic acid ester copolymer as a raw material and using a method including a saponification reaction step and a demetallization reaction step of the copolymer, it can be adjusted according to reactivity in various reactions that convert the ethylene-(meth)acrylic acid ester unit in the (meth)acrylic acid ester copolymer into the (meth)acrylic acid unit (A) and the neutralized (meth)acrylic acid unit (B) through the saponification reaction and demetallization reaction.

The content of the ethylene unit (C) is preferably 80 mol% or more on the basis of all monomer units constituting the ionomer resin, more preferably 85 mol% or more, further preferably 88 mol% or more, as well as preferably 94 mol% or less, more preferably 91 mol% or less. When the content of the ethylene unit (C) is equal to or greater than the foregoing lower limit value, mechanical strength, especially impact resistance, and moldability can be easily improved, and when the is less than or equal to the foregoing upper limit value, crystallization of the ionomer resin can be more easily suppressed, and the transparency of the resulting resin sheet (particularly the transparency during slow cooling) can be easily improved.

From the perspective of easily improving transparency, the ionomer resin in the present invention preferably includes a (meth)acrylic acid ester unit (D) in addition to the (meth)acrylic acid unit (A), the neutralized (meth)acrylic acid unit (B), and the ethylene unit (C).

When the ionomer resin includes the (meth)acrylic acid ester unit (D), from the perspective of easily improving transparency (particularly transparency during slow cooling), the total content of the unit (A), the unit (B), and the unit (D) is 6 to 10 mol% on the basis of all the monomer units that constitute the ionomer resin. When the ionomer resin contains the (meth)acrylic acid ester unit (D) and the total content of the unit (A), the unit (B), and the unit (D) is within the foregoing range, it is easy to improve the transparency, especially the transparency during slow cooling, and self-supporting properties (for example, self-supporting properties in a high temperature environment) of the resulting resin.

When the ionomer resin includes the (meth)acrylic acid ester unit (D), from the perspective of easily improving the transparency of the resulting resin sheet (particularly the transparency during slow cooling) and the adhesion to a base material such as glass, the total content of the unit (A), the unit (B), and the unit (D) is 6 mol% or more, preferably 6.5 mol% or more, more preferably 7.0 mol% or more, and further preferably 7.5 mol% or more, and from the perspective of easily improving the self-supporting properties and moldability of the ionomer resin composition, 10 mol% or less, preferably 9.9 mol% or less, and more preferably 9.5 mol% or less.

The total content of the unit (A), the unit (B), and the unit (D) can be adjusted via the raw material of the ionomer resin. More specifically, when producing an ionomer resin by using an ethylene-(meth)acrylic acid ester copolymer as a raw material and using a method including a saponification reaction step and a demetallization reaction step of the copolymer, this can be adjusted via the amount of modification of the ethylene-(meth)acrylic acid ester unit of the (meth)acrylic acid ester copolymer. Furthermore, as taught in US Patent No. 8399096, when ethylene and (meth)acrylic acid are used as raw materials and are polymerized to produce an ionomer resin, this can be adjust through the ratio of ethylene and (meth)acrylic acid to be copolymerized.

Examples of monomers constituting the (meth)acrylic acid ester unit (D) include methyl (meth)acrylate, ethyl (meth)acrylate. n-propyl (meth)acrylate, isopropyl (meth)acrylate, n-butyl (meth)acrylate, isobutyl (meth)acrylate, sec-butyl (meth)acrylate, t-butyl (meth)acrylate, amyl (meth) acrylate, isoamyl (meth)acrylate, n-hexyl (meth)acrylate, cyclohexyl (meth)acrylate, 2-ethylhexyl (meth)acrylate, pentadecyl (meth)acrylate, dodecyl (meth)acrylate, isobornyl (meth)acrylate, phenyl (meth)acrylate, benzyl (meth)acrylate, phenoxyethyl (meth)acrylate, 2-hydroxyethyl (meth)acrylate, 2-methoxyethyl (meth)acrylate, glycidyl (meth)acrylate, allyl (meth)acrylate, and the like.

From among these, from the perspective of easily improving transparency and heat resistance, the monomer is preferably methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, or t-butyl (meth)acrylate, more preferable monomers are methyl (meth) acrylate, ethyl (meth)acrylate, n-propyl (meth)acrylate, isopropyl (meth)acrylate, n-butyl (meth)acrylate, isobutyl (meth)acrylate, even more preferable monomers are methyl (meth)acrylate, n-butyl (meth)acrylate, isobutyl (meth)acrylate, and a particularly preferable monomer is methyl (meth)acrylate. These (meth)acrylic acid esters may be used alone or in combination of two or more.

When the ionomer resin includes the (meth)acrylic acid ester unit (D), the content of the (meth)acrylic acid ester unit (D) in the ionomer resin is preferably 0.01 mol% or more on the basis of all monomer units constituting the ionomer resin, more preferably 0.05 mol% or more, and further preferably 0.08 mol% or more, as well as preferably 1.0 mol% or less, more preferably 0.7 mol% or less, and further preferably 0.5 mol% or less. When the content of the unit (D) is equal to or greater than the foregoing lower limit value and equal to or less than the foregoing upper limit, the transparency of the resulting resin sheet tends to improve.

Concerning the content of the (meth)acrylic acid ester unit (D), when producing an ionomer resin by using an ethylene-(meth)acrylic acid ester copolymer as a raw material and using a method including a saponification reaction step and a demetallization reaction step of the copolymer, it can be adjusted via the reactivity of the saponification reaction that converts the ethylene-(meth)acrylic acid ester unit (D) in the (meth)acrylic acid ester copolymer to the (meth)acrylic acid unit (A).

The ionomer resin may include other monomer units aside from the (meth)acrylic acid unit (A), the neutralized (meth)acrylic acid unit (B), and the ethylene unit (C), as well as the (meth)acrylic acid ester unit (D) that may be included. Examples of other monomer units include a carboxylic acid unit (A1) other than the (meth)acrylic acid unit (A), a neutralized carboxylic acid unit (B 1) other than the neutralized (meth)acrylic acid unit (B).

Examples of the monomer constituting the carboxylic acid unit (A1) include itaconic acid, maleic anhydride, monomethyl maleate, and monoethyl maleate, and monomethyl maleate and monoethyl maleate are preferable. Examples of the monomer constituting the carboxylic acid neutralized unit (B 1) include neutralized units of the carboxylic acid unit (A1). A neutralized carboxylic acid is that in which the hydrogen ions of carboxylic acid are replaced with a metal ion. Examples of the metal ion include those similar to the metal ions in the neutralized (meth)acrylic acid unit (B) described above, and the metal ions may be used alone or in combination of two or more types.

These other monomer units may be used alone or in combination of two or more.

When the ionomer resin contains the foregoing other monomer unit, the total content thereof, for example, the total content of (A1) and (B 1), may be appropriately selected within a range that does not impair the effects of the present invention; for example, on the basis of all monomer units constituting the ionomer resin, this is preferably 5 mol% or less, more preferably 3 mol% or less, and further preferably 1 mol% or less, as well as preferably 0.01 mol% or more and more preferably 0.1 mol% or more.

The contents of the (meth)acrylic acid unit (A), the neutralized (meth)acrylic acid unit (B), and the ethylene unit (C), as well as the (meth)acrylic acid ester unit (D) when such is included, and other monomer units (for example, the unit (A1) and the unit (B 1)) in the ionomer resin can be determined by first identifying the monomer units in the ionomer resin using pyrolysis gas chromatography, and then using nuclear magnetic resonance spectroscopy (NMR) and elemental analysis. More specifically, this can be determined by the method described in the examples. Furthermore, this can also be determined by a method that combines the foregoing analysis method with IR and/or Raman analysis. Before these analyses, it is preferable to remove components other than the ionomer resin by reprecipitation or Soxhlet extraction.

From the perspective of easily increasing the transparency, coloration resistance, and creep resistance of the resin sheet that is obtained, the content of the ionomer resin with respect to the total mass of the ionomer resin composition is preferably 90 parts by mass or more, more preferably 95 parts by mass or more, further preferably 98 parts by mass or more, and even more preferably 99 parts by mass or more, as well as preferably less than 100 parts by mass, more preferably 99.99 parts by mass or less.

In one embodiment of the present invention, the degree of branching per 1000 carbon atoms of the ionomer resin is not particularly limited, and is preferably 5 to 30, and more preferably 6 to 20. The degree of branching can be adjusted, for example, when producing an ionomer resin by using an ethylene-(meth)acrylic acid ester copolymer as a raw material and using a method including a saponification reaction step and a demetallization reaction step of the copolymer, this can be adjusted according to polymerization temperature when synthesizing the ethylene-(meth)acrylic acid ester. The degree of branching per 1000 carbon atoms can be measured by a broadband dipole decoupling/magic angle spinning (DD/MAS) method using solid-state NMR.

In one embodiment of the present invention, from the perspective of heat resistance and thermal decomposition resistance, the melting point of the ionomer resin is preferably 50°C or more, more preferably 60°C or more, and even more preferably 80°C or more. Furthermore, when producing laminated glass, from the perspective of easily developing strength of adhesion with glass, the melting point is preferably 200°C or lower, more preferably 180°C or lower, and even more preferably 150°C or lower. The melting point can be measured based on JIS K7121:2012. Specifically, measurements were performed using a differential scanning calorimeter (DSC) at a cooling rate of -10°C/min and a heating rate of 10°C/min, and the temperature can be found from the temperature at the top of the melting peak of the second heating.

In one embodiment of the present invention, the heat of fusion of the ionomer resin is preferably 0 J/g or more and 25 J/g or less. The heat of fusion can be measured based on JIS K7122:2012. Specifically, measurements were performed using a differential scanning calorimeter (DSC) at a cooling rate of -10°C/min and a heating rate of 10°C/min, and the temperature can be calculated from the area of the melting peak during the second heating.

In one embodiment of the present invention, the melt flow rate (MFR) of the ionomer resin under conditions of 190°C and 2.16 kg in accordance with JIS K7210 is preferably 0.1 g/10 min or more, more preferably 0.3 g/10 min or more, further preferably 0.7 g/10 min or more, even more preferably 1.0 g/10 min or more, particularly preferably 1.5 g/10 min or less, and preferably 50 g/10 min or less, more preferably 30 g/10 min, and particularly preferably 10 g/10 min or less. When the MFR of the ionomer resin is equal to or greater than the lower limit value and equal to or less than the upper limit value, it is easy to perform molding processing that suppresses deterioration due to heat, and it is easy to obtain a resin sheet having excellent penetration resistance.

The melting point, heat of fusion, and MFR of the ionomer resin can be adjusted via the molecular weight of the ionomer resin and the contents of the (meth)acrylic acid unit (A), neutralized (meth)acrylic acid unit (B), and ethylene unit (C) of the ionomer resin as well as the (meth)acrylic acid ester unit (D) that may be included.

The method for producing the ionomer resin is not particularly limited, and examples include a method including a step of saponifying the ethylene-(meth)acrylic acid ester copolymer (X) as a raw material (saponification step) and a step of demetallizing at least a portion of the resulting saponified product (demetallization step), a method including a step of copolymerizing ethylene and (meth)acrylic acid as raw materials (copolymerization step), and a step of partially neutralizing the resulting copolymer (partial neutralization step).

The saponification step and the demetallization step in the method using an ethylene-(meth)acrylic acid ester copolymer (X) as a raw material may be the same as the saponification step and the demetallization step described in the [Method for Producing Ionomer Resin Composition] section below.

The method for producing a resin in the Specification of US Patent No. 8399096 may be used as reference for a method using ethylene and (meth)acrylic acid as raw materials.

In one embodiment of the present invention, the ionomer resin is preferably produced by a method using the ethylene-(meth)acrylic acid ester copolymer (X) as a raw material, and more preferably produced by the method described in the [Method for Producing Ionomer Resin Composition] section below.

In addition to the ionomer resin and component Y, the ionomer resin composition of the present invention may contain additives as necessary. Examples of additives include additives other than compounds corresponding to the component Y, such as ultraviolet absorbers, anti-aging agents, antioxidants, heat deterioration inhibitors, light stabilizers, anti-sticking agents, lubricants, mold release agents, polymer processing adjuvants, antistatic agents, flame retardants, dye/pigments, organic colorants, matting agents, fluorescence substances, and the like. Among these additives, ultraviolet absorbers, anti-aging agents, antioxidants, heat deterioration inhibitors, light stabilizers, anti-sticking agents, lubricants, mold release agents, polymer processing adjuvants, and organic colorants are preferable. These additives can be used alone or in a combination of two or more.

The content of various additives may be appropriately selected within a range that does not impair the effects of the present invention, and the total content of various additives with respect to the total mass of the resin composition is preferably 7% by mass or less, more preferably 5% by mass or less, and further preferably 4% by mass or less.

In one preferable embodiment of the present invention, the resin sheet obtained from the resin composition of the present invention shows similar values to the haze, slow cooling haze, water absorption haze, degree of yellowing, long-term relaxation modulus, and storage modulus at 50°C listed in the [Resin Sheet] section below. Therefore, the ionomer resin composition of the present invention can form a resin sheet having excellent transparency, coloration resistance, creep resistance, and self-supporting properties.

[Method for Producing Ionomer Resin Composition]

The method for producing the ionomer resin composition of the present invention is not particularly limited, but for example, the ionomer resin composition can be produced by a method, wherein

i) a step of dissolving the ethylene-(meth)acrylic acid ester copolymer (X) in an organic solvent (dissolving step),
ii) a step for saponifying the copolymer (saponification step), and
iii) a step of demetallizing at least a portion of the saponification product obtained at step ii) (demetallization step)

are included, and
at least one of the steps i) to iii) is performed in the presence of $1.0 \times 10^{-6}$ parts by mass to 1.0 parts by mass of the component Y relative to 100 parts by mass of the copolymer. Note that, in this specification, step i) is also referred to as a dissolving step, step ii) as a saponification step, and step iii) as a demetallization step.

In the method of the present invention, by saponification and demetallization in steps ii) and iii), by converting all or part of the (meth)acrylic acid ester units in the ethylene-(meth)acrylic acid ester copolymer (X) into (meth)acrylic acid units and neutralized (meth)acrylic acid units, an ionomer resin containing (meth)acrylic acid units (A), neutralized (meth)acrylic acid units (B), ethylene units (C) and optionally (meth)acrylic acid ester units (D) is obtained, and additionally, by performing at least one of the steps i) to iii) in the presence of the component Y in an amount within the above range, the ionomer resin composition of the present invention is obtained, which contains the ionomer resin and the component Y in the above content in the present invention, for example, 0.01 mass ppm or more and 2000 mass ppm or less.

In the method of the present invention, the method may be such that, by saponification reactions and demetallization reactions in steps ii) and iii), all or part of the (meth)acrylic acid ester units in the ethylene-(meth)acrylic acid ester copolymer (X) is converted into (meth)acrylic acid units and neutralized (meth)acrylic acid units (hereinafter also referred to as method (1)), or the method may be such that, after steps ii) and iii), using a method including a neutralization step wherein the obtained demetalized product is further neutralized, all or part of the (meth)acrylic acid ester units in the ethylene-(meth)acrylic acid ester copolymer is converted into (meth)acrylic acid units and neutralized (meth)acrylic acid units (hereinafter also referred to as method (2)).

In the method (1), specifically, by saponifying the ethylene-(meth)acrylic acid ester copolymer using a base to convert all or part of the (meth)acrylic acid ester units to neutralized (meth)acrylic acid units, obtaining the ethylene-(meth)acrylic acid ester-neutralized (meth)acrylic acid copolymer or ethylene-neutralized (meth)acrylic acid ester copolymer, which is a saponified product, followed by demetallizing part of neutralized (meth)acrylic acid units in the obtained saponified product using an acid to convert to (meth)acrylic acid units, an ionomer resin containing (meth)acrylic acid unit (A), neutralized (meth)acrylic acid unit (B), ethylene unit (C), and optionally (meth)acrylic acid ester unit (D) can be obtained.

In the method (2), specifically, by demetallizing all of the neutralized (meth)acrylic acid units, using an acid, in the saponified product obtained by saponifying the ethylene-(meth)acrylic acid ester copolymer using a base in the method (1), converting into (meth)acrylic acid units and obtaining an ethylene-(meth)acrylic acid copolymer, then neutralizing part of the (meth)acrylic acid units in the obtained demetallized product using a metal ion, and converting such into neutralized (meth)acrylic acid units, an ionomer resin containing (meth)acrylic acid units (A), neutralized (meth)acrylic acid units (B), ethylene units (C), and depending on the case, (meth)acrylic acid ester units (D) is obtained.

Among the methods (1) and (2), producing the ionomer resin by the method (1) is preferable from the viewpoint of easily improving the production efficiency of the ionomer resin by reducing the number of reactions.

In the method of the present invention, by performing at least one of the steps i) to iii) in the presence of $1.0 \times 10^{-6}$ parts by mass to 1.0 parts by mass of the component Y relative to 100 parts by mass of the copolymer (X), the ionomer resin composition of the present invention containing an ionomer resin and the component Y of the above content, for example, of 0.01 mass ppm or more and 2000 mass ppm or less can be obtained.

By making the component Y present in an amount within the above range in at least one of steps i) to iii), the amounts of the component Y within the above range can be present in the reaction system of either a saponification reaction in step ii) and/or a demetallization reaction in step iii). Thus, there is a trend wherein an ionomer resin composition is easily obtained, wherein the component Y is uniformly dispersed at the molecular level in the ionomer resin, and the interaction between the component Y and the ionomer resin tends to increase. Therefore, in one embodiment of the present invention, compared to ionomer resin compositions obtained by methods other than the method of the present invention, for example, by adding the component Y when melt-kneading an ionomer resin while applying shear stress using a twin-screw extruder or the like, the ionomer resin composition obtained by the method of the present invention improves the dispersibility of the component Y. Therefore, the ionomer resin composition obtained by the method according to the present invention easily forms a resin sheet having excellent transparency, coloration resistance, and creep resistance.

In one embodiment of the present invention, the amount of component Y present in at least step iii) is preferably $1.0 \times 10^{-6}$ parts by mass or more and 1.0 parts by mass or less relative to 100 parts by mass of ethylene-(meth)acrylic acid ester copolymer (X), from the viewpoint of easiness of adjusting the content of the component Y in the obtained ionomer resin composition to the above range in the present invention, for example, 0.01 mass ppm or more and 2000 mass ppm or less.

In the present invention, the method for making the component Y present in at least one of steps i) to iii) is not particularly limited, for example, methods such as adding the component Y through at least one of steps i) to iii) are acceptable. In one embodiment of the invention, at least one of steps i) to iii), in order to make the component Y present in, preferably, at least step iii), adding the component Y in at least one of steps i) to iii) is preferable. The adding amount of the component Y in at least one of steps i) to iii) is preferably $1.0 \times 10^{-6}$ parts by mass or more and 1.0 parts by mass or less relative to the 100 parts by mass of the ethylene-(meth)acrylic acid ester copolymer (X), and even more preferably the total adding amount of the component Y in steps i) to iii) is $1.0 \times 10^{-6}$ parts by mass and more and 1.0 parts by mass or less relative to 100 parts by mass of the ethylene-(meth)acrylic acid ester copolymer (X). Thus, the content of the component Y in the obtained ionomer resin composition is easily adjusted to within the above range of the present invention, for example, from 0.01 mass ppm to 2000 mass ppm.

In the present invention, the amount of the component Y present in at least one of steps i) to iii), or the total adding amount of the component Y may be $1.0 \times 10^{-6}$ parts by mass or more and 1.0 parts by mass or less relative to the 100 parts by mass of the copolymer (X), from the viewpoint of easiness of adjusting the content of the component Y in the obtained ionomer resin composition to the above range of the present invention, for example, 0.01 mass ppm or more and 2000 mass ppm or less. The amount of the component Y present is, relative to the 100 parts by mass of the copolymer (X), preferably $1.0 \times 10^{-5}$ parts by mass or more, more preferably $5.0 \times 10^{-5}$ parts by mass or more, and even more preferably $1.0 \times 10^{-4}$ parts by mass or more, and furthermore, is preferably 0.8 parts by mass or less, more preferably 0.5 parts by mass or less, even more preferably 0.3 parts by mass or less, and particularly preferably 0.2 parts by mass or less.

Step i) is a step of dissolving the ethylene- (meth)acrylic acid ester copolymer (X) in an organic solvent to obtain an ethylene- (meth)acrylic acid ester copolymer (X) solution.

Examples of monomers constituting (meth)acrylic acid ester units of the ethylene-(meth)acrylic acid ester copolymer (X) includes methyl (meth)acrylate, ethyl (meth)acrylate. n-propyl (meth)acrylate, isopropyl (meth)acrylate, n-butyl (meth)acrylate, isobutyl (meth)acrylate, sec-butyl (meth)acrylate, t-butyl (meth)acrylate, amyl (meth) acrylate, isoamyl (meth)acrylate, n-hexyl (meth)acrylate, cyclohexyl (meth)acrylate, 2-ethylhexyl (meth)acrylate, pentadecyl (meth)acrylate, dodecyl (meth)acrylate, isobornyl (meth)acrylate, phenyl (meth)acrylate, benzyl (meth)acrylate, phenoxyethyl (meth)acrylate, 2-hydroxyethyl (meth)acrylate, 2-methoxyethyl (meth)acrylate, glycidyl (meth)acrylate, allyl (meth)acrylate, and the like. From among these, preferable monomers are methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, t-butyl (meth)acrylate, more preferable monomers are methyl (meth)acrylate, ethyl (meth)acrylate, n-propyl (meth)acrylate, isopropyl (meth)acrylate, n-butyl (meth)acrylate, isobutyl (meth)acrylate, and even more preferable monomers are methyl (meth)acrylate, n-butyl (meth)acrylate, isobutyl (meth)acrylate, and particularly preferably methyl (meth)acrylate. These (meth)acrylic acid esters may be used alone or in combination of two or more.

Specific examples of the ethylene-(meth)acrylic acid ester copolymer (X) include ethylene-methyl acrylate copolymer, ethylene-methyl methacrylate copolymer, ethylene-ethyl acrylate copolymer, and ethylene-ethyl methacrylate copolymer, ethylene-n-propyl acrylate copolymer, ethylene-n-propyl methacrylate copolymer, ethylene-isopropyl acrylate copolymer, ethylene-isopropyl methacrylate copolymer, ethylene-n-butyl acrylate copolymer, ethylene-n-butyl methacrylate copolymer, ethylene-sec-butyl acrylate copolymer, and ethylene-sec-butyl methacrylate copolymer, and the like.

As these copolymers, commercially available products may be used, or those synthesized by the high temperature and high pressure radical polymerization method described in US 2013/0274424, JP 2006-233059 A, or JP 2007-84743 A may be used. Examples of the commercial products include "Acryft" (registered trademark) WK307 and WH401F manufactured by Sumitomo Chemical Co., Ltd., and "Rexpearl" (registered trademark) A4250 manufactured by Japan Polyethylene Corporation.

In one embodiment of the present invention, the melt flow rate (MFR) of the ethylene-(meth)acrylic acid ester copolymer (X) measured in the condition of 190°C and 2.16 kg in accordance with JIS K7210 is preferably 5 g/10 min or more, more preferably 10 g/10 min or more, even more preferably 50 g/10 min or more, and still more preferably 100 g/10 min or more, and is preferably 400 g/10 min or less, more preferably 350 g/10 min or less, even more preferably 300 g/10 min, and still more preferably 250 g/10 min or less. When the MFR of the ethylene-(meth)acrylic acid ester copolymer (X) is no less than the above lower limit and no more than the above upper limit, the molding properties and strength of the obtained ionomer resin are easily improved. The MFR of the ethylene-(meth)acrylic acid ester copolymer (X) can be adjusted by the degree of polymerization and the content of (meth)acrylic acid ester units. The MFR can be measured, for example, using the method of Examples.

From the viewpoint of easiness of improving the molding properties and strength of the obtained ionomer resin ethylene-(meth)acrylic acid ester copolymer (X), the weight average molecular weight of the ethylene-(meth)acrylic acid ester copolymer (X) is preferably 15,000 g/mol or more, more preferably 20,000 g/mol or more, and even more preferably 30,000 g/mol or more, and is preferably 200,000 g/mol or less, and more preferably 100,000 g/mol or less. Furthermore, from the same viewpoint, the number average molecular weight of the ethylene-(meth)acrylic acid ester copolymer (X) is preferably 5,000 g/mol or more, more preferably 10,000 g/mol or more, and even more preferably 15,000 g/mol, and is preferably 100,000 g/mol or less and more preferably 50,000 g/mol or less. The weight average molecular weight and number average molecular weight can be adjusted by adjusting the amount of the polymerization initiator and/or chain transfer agent during polymerization. The molecular weights (weight average molecular weight and number average molecular weight) of these ethylene-(meth)acrylic acid ester copolymers (X) can be measured by polystyrene conversion using a column (three TSKgel GMH$_{HR}$-H (20) HT columns in series) and a 1,2,4-trichlorobenzene solvent under the condition of 140°C column temperature.

The degree of branching per 1000 carbon atoms of the ethylene-(meth)acrylic acid ester copolymer (X) is not particularly limited, and is preferably 5 to 30, and more preferably 6 to 20. The degree of branching can be adjusted by adjusting the polymerization temperature when polymerizing the copolymer (X). The degree of branching can be measured by dissolving the ethylene-(meth)acrylic acid ester copolymer in deuterated ortho-dichlorobenzene and using a $^{13}$C-NMR inverse gate decoupling method.

The organic solvent for dissolving the ethylene-(meth)acrylic acid ester copolymer (X) is not particularly limited so long as the copolymer (X) can be dissolved, and examples include: ethers such as tetrahydrofuran and dioxane; halogen-containing solvents such as chloroform and dichlorobenzene; ketones having 6 or more carbon atoms such as methyl butyl ketone; hydrocarbon compounds such as hexane; acetate esters such as ethyl acetate and methyl acetate; mixed solvents of hydrocarbon compounds and alcohols such as methanol, ethanol, 1-propanol, 2-propanol, and 1-butanol; aromatic compounds such as benzene, toluene, xylene, and ethylbenzene; mixed solvents of an aromatic compound and alcohols; and the like. These solvents may be used alone or in combination of two or more. Among these, aromatic compounds and mixed solvents of aromatic compounds and alcohols are preferable, and aromatic compounds are more preferable from the viewpoint of solubility and recovery of ionomer resin composition that can be obtained and solvent.

The content of the copolymer (X) in the ethylene-(meth)acrylic acid ester copolymer (X) solution obtained in step i) is preferably 5% by mass or more, more preferably 10% by mass or more, and even more preferably 20% by mass or more, and is preferably 80% by mass or less, more preferably 60% by mass or less, and even more preferably 40% by mass or less. When the content of copolymer (X) in the solution is no more than the upper limit described above, it is easy to improve process completion rate and control the reaction, and when it is no less than the lower limit described above, it is easy to increase productivity.

In step i), the temperature at which the ethylene-(meth)acrylic acid ester copolymer (X) is dissolved in the organic solvent is not particularly limited, but, from the viewpoint of solubility of the ethylene-(meth)acrylic acid ester copolymer (X), the temperature is preferably 30°C or higher, more preferably 40°C or higher, even more preferably 50°C or higher, and particularly preferably 55°C or higher. The upper limit of the temperature is preferably 120°C or less, more preferably 100°C or less, and even more preferably 80°C or less.

Step i) may be performed in air or in an inert gas such as nitrogen gas or argon gas. Furthermore, step i) may be performed under normal pressure, increased pressure, or reduced pressure, and is preferably performed under increased pressure.

Step ii) is a step for saponifying the ethylene-(meth)acrylic acid ester copolymer (X) in the ethylene-(meth)acrylic acid ester copolymer (X) solution obtained in step i) to obtain a saponified product of the copolymer (X).

Saponification of the copolymer (X) can be performed by adding a base to the ethylene- (meth)acrylic acid ester copolymer (X) solution, and examples of the base used for saponification include sodium hydroxide, potassium hydroxide and calcium hydroxide, and, from the viewpoint of solubility in solvents and economical efficiency, sodium hydroxide and potassium hydroxide are preferable.

The adding amount of the base may be, for example, relative to 100 parts by mol of (meth)acrylic acid ester units of the ethylene-(meth)acrylic acid ester copolymer (X), preferably 100 to 300 parts by mol, more preferably 120 to 250 parts by mol, and even more preferably 150 to 200 parts by mol.

Examples of the solvent used for saponification include the same organic solvent as the organic solvent into which the ethylene-(meth)acrylic acid ester copolymer (X) is dissolved in step i). Among these, from the viewpoint of resin solubility before and after the saponification reaction, preferable solvents are mixed solvents of hydrocarbon compounds and alcohols and mixed solvents of aromatic compounds and alcohols, and more preferable solvents are mixed solvents of aromatic compounds such as toluene and alcohols such as methanol. The ratio of the hydrocarbon compound or aromatic compound to the alcohols in the mixed solvent may be appropriately selected depending on the type of each solvent used, and, for example, the mass ratio of the hydrocarbon compound or aromatic compound to the alcohols (carbohydrate hydrogen compounds or aromatic compounds/alcohols) may be 50/50 to 90/10.

From the viewpoint of the reactivity thereof and the solubility of the ethylene-(meth)acrylic acid ester copolymer (X), the temperature at which the saponification reaction is performed is preferably 50°C or higher, more preferably 60°C or higher, and even more preferably 70°C or higher, and particularly preferably 80°C or higher. The upper limit of the temperature is preferably 180°C or less, more preferably 150°C or less, and even more preferably 120°C or less.

The above saponification reaction may be performed in air, or performed in an inert gas such as nitrogen gas, alcohol gas, or the like. Furthermore, the above saponification reaction may be performed under normal pressure, increased pressure, or reduced pressure, and is preferably performed under increased pressure.

Step iii) is a step for demetallizing at least a portion of the saponified product of the ethylene-(meth)acrylic acid ester copolymer (X) obtained by saponification in step ii).

Demetallization of the saponified product can be performed by an acid. Examples of acids used in the demetallization reaction include weak acids such as acetic acid, and strong acids such as hydrochloric acid, nitric acid, sulfuric acid, and toluenesulfonic acid. Among these, from the viewpoint of easiness of washing and removing the base used in saponification reaction and salts produced from acids used in the demetallization reaction, strong acids are preferable, and inorganic acids such as hydrochloric acid, nitric acid, and sulfuric acid are more preferable.

As an example of the solvent used in the demetallization reaction, the same solvent as the solvent used in the saponification reaction in step ii) can be selected.

For the adding amount of acid, a suitable amount can be selected in accordance with the adding amount of strong base in order to adjust the neutralized (meth)acrylic acid unit (B) to an arbitrary value.

The temperature at which the above demetallization is performed is, from the viewpoint of easiness of lowering the viscosity of the reaction solution, preferably 20°C or higher, more preferably 30°C or higher, and even more preferably 40°C or higher, and is preferably 180°C or lower, more preferably 150°C or lower, even more preferably 120°C or lower, and particularly preferably 100°C or lower.

The above demetallization may be performed, similarly to the above saponification reaction, in air or in an inert gas such as nitrogen gas, alcohol gas, or the like. Furthermore, the demetallization described above may be performed under normal pressure, increased pressure, or reduced pressure, and is preferably performed under increased pressure.

When conversion of all or part of the (meth)acrylic acid ester units in the ethylene-(meth)acrylic acid ester copolymer (X) to (meth)acrylic acid units and neutralized (meth)acrylic acid units is performed by the above method (2), a neutralization step of neutralizing a part of the (meth)acrylic acid units using metal ions may be included after step iii).

In the neutralization step of method (2) above, the neutralizing agent used to neutralize and convert a part of the (meth)acrylic acid units into neutralized (meth)acrylic acid unit is not particularly limited so long as the neutralizing agent is an ionic compound that contains metal ions. Examples of the metal ions include alkali metal ions such as lithium, potassium, and sodium, alkaline earth metal ions such as magnesium and calcium, transition metal ions such as zinc, nickel, iron, and titanium, and aluminum ions, and the like. For example, when the metal ion is a sodium cation, examples of the neutralizing agent include sodium hydroxide, sodium acetate, sodium hydrogen carbonate, and the like. Furthermore, polymers such as ionomer resins containing sodium (meth)acrylate units can also be used as neutralizing agents.

After step iii), or when a neutralization step is further included after step iii), after the neutralization step, the ionomer resin composition of the present invention can be obtained by separating and purifying a crude ionomer resin composition containing a crude ionomer resin and the component Y, which is a reaction product in the obtained reaction solution, from the reaction mixture. The separation and purification step may be performed using a conventional method, for example, separation means such as filtration, washing, concentration, reprecipitation, recrystallization, and silica gel column chromatography.

In one embodiment of the present invention, the separation and purification step is performed by, from the viewpoint of easiness of washing and removing of salts that may be produced as a by-product from the base used in the saponification reaction and the acid used in the demetallization reaction, adding a poor solvent to a solution of the crude ionomer resin composition to cause granular resin composition to be precipitated; followed by washing the precipitated granular resin composition using the cleaning solution.

The solution of the crude ionomer resin composition can be prepared by dissolving the crude ionomer resin composition obtained after the demetallization step or after the neutralization step following the demetallization step into a solvent, and the reaction solution obtained after the demetallization step or the neutralization step following the demetallization step may be used as a solution of the crude ionomer resin composition.

The solvent in the solution of the crude ionomer resin composition is not particularly limited so long as the solvent is a solvent that can dissolve the crude ionomer resin or the crude ionomer resin composition, and examples thereof include the same solvents as those used in the saponification reaction. Among these, a mixed solvent of an aromatic compound such as toluene and an alcohol such as methanol is preferable, from the viewpoint of solubility of the crude ionomer resin or crude ionomer resin composition. The ratio of the aromatic compound to the alcohols in the mixed solvent may be appropriately selected based on the type of each solvent used, for example, the mass ratio of the aromatic compound to the alcohols (aromatic compound/alcohols) may be 50/50 to 90/10 and preferably 65/35 to 85/15.

The concentration of the crude ionomer resin in the solution of the crude ionomer resin composition is, from the viewpoint of easiness of obtaining a granular resin composition having a small particle size and easiness of removing salts produced as a by-product, preferably 30% by mass or less and more preferably 15% by mass or less, and is preferably 1% by mass or more, and more preferably 5% by mass or more.

The temperature of the solution of the crude ionomer resin composition is preferably not higher than the melting point of the ionomer resin, more preferably 60°C or lower, and even more preferably 50°C or lower, from the viewpoint of easiness of suppressing aggregation or sticking of the precipitated granular resin composition and easily removing salts produced as a by-product. Furthermore, from the viewpoint of fluidity of the solution of the crude ionomer resin composition, the temperature is more preferably 25°C or higher, and even more preferably 30°C or higher.

The poor solvent to be added to the solution of the crude ionomer resin composition is not particularly limited so long as the poor solvent is a solvent that mixes with the solution of the crude ionomer resin composition and does not dissolve the ionomer resin, and the examples thereof include alcohols such as methanol, ethanol, 1-propanol, 2-propanol, and 1-butanol; water; ketones such as acetone and methyl ethyl ketone; esters such as methyl acetate and ethyl acetate; ethers such as dimethyl ether, diethyl ether, and tetrahydrofuran; and hydrocarbon compounds such as n-hexane, cyclohexane, and heptane. These may be used alone or in combination of two or more. Among these, the poor solvent is preferably alcohols such as methanol and 2-propanol, water, and mixed solvents thereof, and more preferably alcohols such as methanol, from the viewpoint of easiness of drying the ionomer resin due to the low boiling point thereof and easiness of removing salts produced as a by-product salts in the granular resin.

The adding amount of the poor solvent may be appropriately selected depending on the concentration of the solution of the crude ionomer resin composition. For example, the adding amount of the poor solvent is preferably 30 parts by mass or more, more preferably 60 parts by mass or more, and particularly preferably 100 parts by mass or more, relative to 100 parts by mass of the solution of the crude ionomer resin composition. The upper limit value of the adding amount of the poor solvent is not particularly limited, and the upper limit value of the adding amount of the poor solvent is normally 1000 parts by mass or less relative to 100 parts by mass of the solution of the crude ionomer resin composition.

The method for adding the poor solvent to the solution of the crude ionomer resin composition is not particularly limited, for example, the poor solvent may be added to the solution of the crude ionomer resin composition all at once, or may be added in multiple portions by dropwise addition or the like. The particle size of the granular resin composition tends to become smaller, making it easy to improve the removability of by-product salts, and as a result, from the viewpoint of easiness of improving the transparency of the resin sheet formed from the obtained ionomer resin composition, addition of the poor solvent is preferably performed in a relatively short period of time, and more preferably the poor solvent is added all at once. When adding the poor solvent in multiple portions, it is preferable to complete the addition of the poor solvent within one hour, more preferably within 30 minutes, and even more preferably within 10 minutes.

After adding the poor solvent to the solution of the crude ionomer resin composition, it is preferable that the mixed solution of the solution of the crude ionomer resin composition and the poor solvent is stirred. Although the stirring speed is not particularly limited, the faster the stirring speed, the easier it is to obtain granular particles with smaller particle sizes. The stirring time is not particularly limited, and for example, the mixed solution may be stirred until the granular resin composition precipitates and the mixed solution of the solution of the crude ionomer resin composition and the poor solvent becomes a slurry, and specifically, the stirring time is preferably from 1 second to 3 hours, more preferably from 10 seconds to 1 hour, and even more preferably from 1 minute to 30 minutes.

The particle size at the top of the peak of the granular resin composition precipitated by adding the poor solvent to the solution of the crude ionomer resin composition is, from the viewpoint of easiness of removing salts produced as a by-product in the granular resin composition by increasing the specific surface area of the granular resin composition, and furthermore, from the viewpoint of easiness of adjusting the content of the component Y in the obtained ionomer resin composition to 0.01 mass ppm or more and 2000 mass ppm or less, 700 $\mu$m or less, preferably 650 $\mu$m or less, more preferably 600 $\mu$m or less, and even more preferably 550 $\mu$m or less. Furthermore, from the viewpoint of easiness of improving the filterability of the granular resin composition and easiness of improving the production efficiency of the ionomer resin composition, the particle size is preferably 50 $\mu$m or more, more preferably 70 $\mu$m or more, and preferably 80 $\mu$m or more.

The particle size at the top of the peak of the granular resin composition precipitated by adding a poor solvent to a solution of the crude ionomer resin composition can be adjusted by adjusting the concentration and temperature of the solution of the crude ionomer resin composition. Specifically, when the concentration and/or temperature of the solution of the crude ionomer resin composition is reduced, the particle size at the top of the peak of the precipitated granular resin composition can be decreased, and when the concentration and/or temperature of the solution of the crude ionomer resin composition is increased, the particle size at the top of the peak of the precipitated granular resin composition can be increased. Furthermore, the particle size at the top of the peak of the granular resin composition can also be adjusted by the adding method of the poor solvent and the stirring speed of the mixed solution of the solution of the crude ionomer resin composition and the poor solvent.

The cleaning solution for cleaning the precipitated granular resin composition is not particularly limited as long as the cleaning solution is a solvent wherein the ionomer resin or the ionomer resin composition is not dissolved. Examples of preferable cleaning solutions include alcohols such as methanol, ethanol, 1-propanol, and 2-isopropanol; water; ketones such as acetone and methyl ethyl ketone; esters such as methyl acetate and ethyl acetate; ethers such as dimethyl ether, diethyl ether, and tetrahydrofuran. These may be used alone, or in a combination of two or more.

Among these cleaning solutions, alcohols, water, and mixed solutions thereof are preferable from the viewpoint of easiness of removing salts produced as a by-product. Additionally, from the viewpoint of easiness of improving the removability of salts produced as a by-product by making the specific gravity of the cleaning solution smaller than that of the granular resin composition and increasing the contact area between the cleaning solution and the granular resin composition, the viewpoint of easiness of adjusting the content of the component Y in the ionomer resin composition obtained within the above range after washing, and the viewpoint of easiness of drying the obtained ionomer resin composition after washing, a preferable cleaning solution is a mixed solution of water and alcohols. Preferable alcohols are methanol and ethanol, more preferably methanol, from being easy to dry and having a high compatibility with water.

The ratio of water and alcohol in the mixed solution of water and alcohol (water/alcohol (mass%)) is preferably 20/80 to 80/20 and more preferably 30/70 to 70/30.

An example of a method for washing a granular resin composition using a cleaning solution includes a method wherein a granular resin composition dispersion in which the granular resin composition has precipitated is filtered to obtain the granular resin composition and the filtered granular resin composition is mixed with a cleaning solution and dehydrated. More specifically, a method wherein: after the granular resin composition filtered from the granular resin composition dispersion is mixed with a cleaning solution, the granular resin composition is filtered from the cleaning solution (hereinafter also referred to as washing step (a)); and next, the filtered granular resin composition is mixed with a new cleaning solution, and the granular resin composition is filtered from the cleaning solution (hereinafter also referred to as cleaning step (b)); is mentioned as an example. From the viewpoint of easily removing salts produced as a by-product and contained in the granular resin composition and from the viewpoint of production efficiency of the ionomer resin, for washing of the granular resin composition, in the case of a batch process, for example, after a single washing step (a), washing step (b) is preferably performed 1 to 10 times, and the number of times of washing step (b) after the single washing step (a) is more preferably 1 to 6 times, and still more preferably 1 to 4 times.

The amount of the cleaning solution used per one cleaning step may be appropriately selected depending on the amount of granular resin composition to be washed. For example, the amount of the cleaning solution used per one cleaning step is preferably 100 parts by mass to 2000 parts by mass, more preferably 200 parts by mass to 1000 parts by mass, and more preferably 300 parts by mass to 700 parts by mass, relative to 100 parts by mass of the granular resin composition when dry.

The ionomer resin composition obtained by washing the granular resin composition using a cleaning solution may be dried as needed. The drying temperature may preferably be the melting point of the ionomer resin or lower and more preferably 80°C or lower.

The ionomer resin composition of the present invention may be in the form of pellets or the like to improve convenience during storage, transportation, or molding. When the ionomer resin composition is pelletized, pellets can be obtained, for example, by cutting strands obtained by melting extrusion method. In the case of pelletizing by melting extrusion method, the temperature of the ionomer resin composition during melting extrusion is preferably 150°C or higher and more preferably 170°C or higher, from the viewpoint of easily stabilizing the discharge from the extruder. Furthermore, the temperature is preferably 250°C or lower and more preferably 230°C or lower, from the viewpoint of suppressing deterioration of the ionomer resin due to pyrolysis. The ionomer resin and ionomer resin composition of the present invention have high thermal decomposition resistance, when pelletizing using the melting extrusion method, problems such as the formation of black foreign matter due to thermal decomposition of the ionomer resin are less likely to occur.

[Resin sheet]

The present invention also includes a resin sheet containing the ionomer resin composition of the present invention. The resin sheet of the present invention has one or more layers containing ionomer resin composition of the present invention (hereinafter also referred to as layer (x)).

The resin sheet of the present invention may be configured by the layer (x) only, or may be a laminate containing at least one layer of the layer (x). The laminate is not particularly limited, but include, for example, a laminate including two or more layers of the layer (x), a laminate including one or more layers of the layer (x) and one or more layers of other layers, and the like. When layer (x) or another layer is a plurality of layers, the resin or resin composition constituting each layer may be the same or different.

As examples of the other layers, layers containing known resins are included. As the resin, for example, polyethylene terephthalate, polybutylene terephthalate, cyclic polyolefin, polyphenylene sulfide, polytetrafluoroethylene, polysulfone, polyethersulfone, polyarylate, liquid crystal polymer, polyamide, thermoplastic elastomer, and the like can be used from among polyethylene, polypropylene, polyvinyl chloride, polystyrene, polyurethane, polytetrafluoroethylene, acrylic resin, polyamide, polyacetal, polycarbonate, and polyester. Furthermore, other layers may also contain the above-mentioned additives and one or more additives such as plasticizers, anti-blocking agents, pigments, dyes, heat-shielding materials (for example, inorganic heat-shielding fine particles or organic heat-shielding materials having infrared absorbing capability), and functional inorganic compounds as needed.

In one embodiment of the present invention, the resin sheet of the present invention preferably has an uneven structure on the surface such as melt fracture or embossing by a conventionally known method, from the viewpoint of excellent bubble release properties when thermocompression bonding the resin sheet and the base material. The shapes of the melt fracture and embossing may be appropriately selected from conventionally known shapes.

The thickness of one layer of layer (X) in the resin sheet of the present invention is preferably 0.1 mm or more, more preferably 0.2 mm or more, even more preferably 0.3 mm or more, and particularly preferably 0.4 mm or more, and furthermore, is preferably 5 mm or less, more preferably 4 mm or less, even more preferably 2 mm or less, and particularly preferably 1 mm or less. When the layer (x) in the resin sheet has a plurality of layers, the thicknesses of one layer consisting of the plurality of layers (x) in the resin sheet may be the same or different.

The thickness of the resin sheet of the present invention is preferably 0.1 mm or more, more preferably 0.2 mm or more, even more preferably 0.3 mm or more, still more preferably 0.4 mm or more, particularly preferably 0.5 mm or more, more particularly preferably 0.6 mm or more, even more particularly preferably 0.7 mm or more, and still more particularly preferably 0.75 mm or more, and furthermore, is preferably 20 mm or less, more preferably 15 mm or less, still more preferably 10 mm or less, and even more preferably is 5 mm or less, particularly preferably 4 mm or less, more particularly preferably 2 mm or less, and even more particularly preferably 1 mm or less.

The thickness of the resin sheet is measured using a conventionally known method, such as a contact or non-contact thickness gauge. The resin sheet may be in a rolled state or in a single sheet state.

The resin sheet of the present invention has excellent transparency. The haze of the resin sheet of the present invention is preferably 2.0% or less, more preferably 1.5% or less, and even more preferably 1.0% or less. As the haze becomes smaller, the transparency of the resin sheet becomes higher, and thus the lower limit value is not particularly limited, for example, the haze may be 0.01%. Note that the haze of the resin sheet is measured, for example, using a haze meter in accordance with JIS K7136:2000.

The resin sheet of the present invention also has excellent transparency during slow cooling. The transparency during slow cooling can be evaluated by the haze during slow cooling (slow cooling haze). The slow cooling haze of the resin sheet of the present invention is preferably 5.0% or less, more preferably 4.5% or less, even more preferably 4.0% or less, still more preferably 3.0% or less, and particularly preferably It is 2.5% or less. As the haze becomes smaller, the transparency of the resin sheet becomes higher, and thus the lower limit value is not particularly limited, for example, the haze may be 0.01% or more. The slow cooling haze is found by measuring the haze using a haze meter in accordance with JIS K7136:2000 after producing a laminated glass having the resin sheet as an interlayer film, heating the laminated glass to 140°C, and slowly cooling it from 140°C to 23°C at a rate of 0.1°C/min, which can be, for example, found using the method of Examples.

The resin sheet of the present invention has excellent transparency even under high-humidity conditions, and the transparency of the resin sheet under high-humidity conditions can be evaluated by the haze of the resin sheet when water is absorbed thereinto (water absorption haze). The water absorption haze of the resin sheet of the present invention is preferably 9.0% or less, more preferably 5.0% or less, and even more preferably 3.0% or less. As the haze becomes smaller, the transparency in a state wherein the resin sheet absorbed water becomes higher, and thus the lower limit value is not particularly limited, for example, the haze may be 0.01% or more. The water absorption haze can be measured using a haze meter in accordance with JIS K7136:2000, by, for example, holding a resin sheet immersed in ion-exchanged water at 23°C for 300 hours, taking the resin sheet out from the ion-exchanged water, and wiping off the water adhering to the surface, and setting the resin sheet to be the test piece.

The resin sheet of the present invention has excellent coloring resistance and is less likely to be colored during molding. In the viewpoint of being easy to improve coloring resistance, the yellowness index (YI) of the resin sheet of the present invention is preferably 3.0 or less, more preferably 2.0 or less, still more preferably 1.5 or less, and particularly preferably 1.0 or less. As the yellowness index (YI) becomes smaller, the coloring resistance of the resin sheet becomes higher, and thus the lower limit value is not particularly limited, for example, the haze may be 0 or more. Note that the yellowness index (YI) can be measured using a color measuring colorimeter in accordance with JIS Z8722, for example, using the method described in Examples.

The resin sheet of the present invention has excellent creep resistance, and thus when the resin sheet of the present invention is used as a laminated glass interlayer film, the strength does not easily decrease even when used for a long time, making it easy to ensure safety. The creep resistance of a resin sheet can be evaluated by the relaxation modulus after a long period of time (long-term relaxation modulus), for example, the relaxation modulus $2.6 \times 10^6$ seconds (about 1 month) after a master curve is created at 50°C. In one embodiment of the present invention, when a master curve is created at 50°C, the relaxation modulus after $2.6 \times 10^6$ seconds (about 1 month) is, from the viewpoint of easily increasing the creep resistance of the resin sheet, preferably 0.3 MPa or more, more preferably 0.4 MPa or more, and still more preferably 0.5 MPa or more. Furthermore, the relaxation modulus may be 5.0 MPa or less and more preferably 2.5 or less, from the viewpoint of handling properties of the resin sheet. The relaxation modulus described above can be found from a composite curve (hereinafter referred to as master curve) of the reference temperature 50°C, which is obtained from dynamic viscoelasticity measurement and time-temperature superposition principle using a dynamic viscoelasticity measurement device after the resin sheet is left standing in an atmosphere of 23°C and 50% RH for more than one week, and, for example, can be found using the method of Examples.

The resin sheet of the present invention has excellent self-standing property in high-temperature environments. Self-standing property in high-temperature environments can be evaluated according to the storage modulus at 50°C. The storage modulus of the resin sheet of the present invention is preferably 20 MPa or greater, more preferably 30 MPa or greater, further preferably 40 MPa or greater, and particularly preferably 50 MPa or greater from the perspective of easily expressing excellent self-standing property in a high-temperature environment (for example, approximately 50°C). The upper limit of the storage modulus is not particularly limited and may be 1,000 MPa. The storage modulus (E') at 50°C of the resin sheet can be measured by dynamic viscoelastic measurement.

The resin sheet of the present invention preferably has a low water content from the perspective of foaming being less likely when producing the laminated glass. The water content of the resin sheet is preferably 1 mass% or lower, more preferably 0.5 mass% or lower, further preferably 0.02 mass% or lower, and particularly preferably 0.01 mass% or lower. The content can be measured by coulometric titration.

In one embodiment of the present invention, the content of the ionomer resin composition of the present invention that is included in the resin sheet of the present invention is preferably 90 mass% or higher, more preferably 93 mass% or higher, further preferably 95 mass% or higher, even further preferably 98 mass% or higher, and preferably 100 mass% or lower relative to the mass of the resin sheet from the perspective of easily increasing the transparency, coloration resistance, and creep resistance of the resin sheet that is obtained.

[Method for Producing Resin Sheet]

The method for producing the resin sheet of the present invention is not limited in particular. For example, layer (x) can be produced by a known film formation method such as extrusion, calendering, pressing, solution casting, melt-casting, or inflation after uniformly kneading the ionomer resin composition of the present invention. Layer (x) may be used independently as the resin sheet. As necessary, two or more layers of layer (x), or one or more layers of layer (x) and one or more layers of another layer, may be laminated by press molding or the like to be made into a laminated resin sheet, or two or more layers of layer (x), or one or more layers of layer (x) and one or more layers of another layer, may be molded by coextrusion to be made into a laminated resin sheet. When there is a plurality of layers of layer (x) or the other layer, the resin compositions constituting each layer may be the same or different.

Among the known film formation methods, a method of producing the resin sheet by using an extruder is suitably used. The resin temperature at the time of extrusion is preferably 150°C or higher and more preferably 170°C or higher from the perspective of easily stabilizing discharge of the resin from the extruder and easily decreasing mechanical problems. The resin temperature at the time of extrusion is preferably 250°C or lower and more preferably 230°C or lower from the perspective of easily decreasing decomposition of the resin and degradation of the resin that accompanies decomposition. Removing volatile substances from a vent hole of the extruder by depressurization is preferable in order to efficiently remove the volatile substances.

[Laminated glass interlayer film and laminated glass]

The resin sheet of the present invention can be suitably used as a laminated glass interlayer film (also referred to as simply "interlayer film"). Therefore, the present invention includes a laminated glass interlayer film that is composed of the resin sheet of the present invention. The present invention also includes laminated glass that has two glass sheets and the laminated glass interlayer film of the present invention, the interlayer film being disposed between the two glass sheets. The laminated glass of the present invention has the laminated glass interlayer film that is composed of the resin sheet and thus can have excellent transparency.

For example, an inorganic glass such as float plate glass, polished plate glass, figured plate glass, wired plate glass, or heat-absorbing plate glass or a conventionally known organic glass such as polymethyl methacrylate or polycarbonate can be used as the glass sheets that are laminated with the interlayer film of the present invention. The glass sheets may be colorless or colored. One type of glass sheet may be used, or two or more types of glass sheets may be used in combination. The thickness of one glass sheet is preferably 100 mm or less, and the thicknesses of the two glass sheets may be the same or different.

The laminated glass that is made by sandwiching the resin sheet of the present invention between two sheets of glass can be produced by a conventionally known method. For example, a method in which a vacuum laminator device is used, a method in which a vacuum bag is used, a method in which a vacuum ring is used, and a method in which a nip roller is used can be mentioned. A method in which the components are pre-bonded by a method from the above and afterward subjected to final adhesion by being placed in an autoclave can also be mentioned.

The laminated glass can be produced by laminating the glass sheets, the interlayer film, and any layer (for example, an adhesive resin layer) at 60 to 200°C-in particular, 80 to 160°C-under reduced pressure of, for example $1 \times 10^{-6}$ to $1 \times 10^{-1}$ MPa when a vacuum laminator device is used. A method in which a vacuum bag or vacuum ring is used is disclosed in, for example, EP 1 235 683 B1; the laminated glass can be produced by laminating the glass sheets, the interlayer film, and any layer at 100 to 160°C under approximately $2 \times 10^{-2}$ to $3 \times 10^{-2}$ MPa of pressure.

A method in which the glass sheets, the interlayer film, and any layer are laminated; deaeration is performed by the roller at a temperature that is at or below the temperature at which the interlayer film starts to flow; and pressure bonding is afterward performed at a temperature that is near the temperature at which the interlayer film starts to flow can be mentioned as an example of the production method in which a nip roller is used. Specifically, a method in which heating to 30 to 70°C is performed by, for example, an infrared heater; deaeration is afterward performed by the roller; heating to 50 to 120°C is further performed; and pressure bonding is afterward performed by the roller can be mentioned.

When pressure bonding is performed by using a method from the above and further pressure bonding is afterward performed by placing the laminated glass in an autoclave, the operating conditions of the autoclave step are selected as appropriate according to the thickness and configuration of the laminated glass. For example, treating the laminated glass for 0.5 to 3 hours at 100 to 160°C under 0.5 to 1.5 MPa of pressure is preferable.

The ionomer resin composition of the present invention and the resin sheet that is obtained from the resin composition have high transparency and high adhesion to glass. Thus, the laminated glass of the present invention has excellent transparency. In one embodiment of the present invention, the haze of the laminated glass of the present invention is preferably 1.0% or less, more preferably 0.8% or less, and further preferably 0.5% or less. The transparency of the laminated glass increases as the haze decreases. Thus, the lower limit is not limited in particular and may be, for example, 0.01%. The haze of the laminated glass is measured according to JIS K 7136 : 2000 by using a haze meter.

The laminated glass of the present invention also has excellent transparency when annealed. The transparency when the laminated glass is annealed can be evaluated by the haze when the laminated glass is annealed ("annealing haze"). The annealing haze of the laminated glass of the present invention is preferably 5.0% or less, more preferably 4.5% or less, further preferably 4.0% or less, even further preferably 3.0% or less, and particularly preferably 2.5% or less. The transparency of the laminated glass increases as the haze decreases. Thus, the lower limit is not limited in particular and may be, for example, 0.01% or greater. The annealing haze of the laminated glass is found by using a haze meter to measure the haze after heating the laminated glass to 140°C and then annealing the laminated glass from 140°C to 23°C at a rate of 0. 1°C/minute, the measurement being according to JIS K 7136 : 2000; for example, the annealing haze can be found by the method described in the examples.

The laminated glass of the present invention has little coloration and is preferably as colorless as possible. The yellowness index (YI) of the laminated glass of the present invention is preferably 3.0 or lower, more preferably 2.0 or lower, further preferably 1.5 or lower, particularly preferably 1.0 or lower, and preferably 0 or higher. The yellowness index (YI) can be measured by using a colorimeter, the measurement being according to JIS Z 8722.

As above, the resin sheet that is made by including the ionomer resin composition of the present invention is useful as a laminated glass interlayer film. The laminated glass interlayer film is particularly preferable as the interlayer film of laminated glass for a structural material (for a facade) in view of excellent adhesion to a base material such as glass and excellent transparency, coloration resistance, creep resistance, and self-standing property. The laminated glass interlayer film is not limited to being the interlayer film of laminated glass for a structural material and is also suitable as the interlayer film for laminated glass in various applications such as a windshield for an automobile; a side window for an automobile; a sunroof for an automobile; a rear window for an automobile; glass for a head-up display; another laminate for a moving body, outer wall, or roof; a structure such as a panel, a door, a window, a wall, a roof, a sunroof, a sound-insulating wall, a display window, a balcony, or a handrail wall; a partition-glass member for a conference room; or a solar battery but is not limited thereto.

## EXAMPLES

The present invention is specifically described below by means of examples and comparative examples, but the present invention is not limited to the following examples.

[Content in Monomer Units of Raw-Material Resin and Ionomer Resin]

(Raw-material resin)

The ethylene-(meth)acrylic acid ester copolymers that were used as the raw materials in the examples and comparative examples were dissolved in heavy toluene or heavy THF, and the compositions were quantified by $^1$ H NMR (400 MHz, made by JEOL).

(Ionomer resin)

The content of the (meth)acrylic acid unit (A), the neutralized (meth)acrylic acid unit (B), the ethylene unit (C), and the (meth)acrylic acid ester unit (D) in the ionomer resins that were obtained in the examples and the comparative examples was analyzed as follows.

The ionomer resins that were obtained in the examples and the comparative examples were each dissolved in a mixed solvent of dehydrated toluene / dehydrated acetic acid (75 / 25 mass%) and reacted for 2 hours at 100°C. Afterward, the mixtures were reprecipitated in a mixed solvent of acetone/water (80 / 20 mass%) to convert the neutralized (meth)acrylic acid unit (B) into the (meth)acrylic acid unit (A). The obtained resins were thoroughly washed with water and then dried, and the dried resins were subjected to (1) to (3) below.

(1) The components of the monomer units that constitute the resins were analyzed by thermal-decomposition GC-MS.
(2) The acid values of the resins were measured according to JIS K 0070-1992.
(3) $^1$ H NMR (400 MHz, made by JEOL) measurement of the resins was performed by using a mixed solvent of deuterated toluene and deuterated methanol.
(4) The ionomer resins that were obtained in the examples and the comparative examples were subjected to a microwave-decomposition pretreatment that uses nitric acid. Afterward, the types and quantities of metal ions of the neutralized (meth)acrylic acid unit (B) were identified by ICP emission analysis ("iCAP 6500 Duo," made by Thermo Fisher Scientific).

The types and structures of the (meth)acrylic acid ester unit (D) and the (meth)acrylic acid unit (A) were identified on the basis of (1). The ratios of the ethylene unit (C) / the (meth)acrylic acid ester unit (D) / (the total of the (meth)acrylic acid unit (A) and the neutralized (meth)acrylic acid unit (B)) were calculated from the information that was identified from (1) and the information of (2) and (3). The ratios of the ethylene unit (C) / the (meth)acrylic acid ester unit (D) / the (meth)acrylic acid unit (A) / the neutralized (meth)acrylic acid unit (B) were also calculated from the information of (4).

[Content of Component Y in Ionomer Resin Composition]

(Content of organic compound that has hydroxyl group or amide group and modified product of the compound)

900 g of a mixed solvent of toluene / n-butanol / propylene glycol (75 / 15 / 10 vol%) was added to 100 g of the ionomer resin compositions that were obtained in the examples and the comparative examples, and the mixtures were heated and stirred for 2 hours at 100°C. Afterward, the mixtures were reprecipitated in 1,000 g of methanol. A rotary evaporator was used to completely remove the solvent from the obtained filtrates at 80°C. The obtained concentrates were diluted in methanol, the obtained dilutions were analyzed by gas chromatography, and the components that are included in the resin compositions were quantified on the basis of the obtained peak area ratios.

(Content of inorganic substance that has hydroxyl group or amide group)

990 g of a mixed solvent of dehydrated toluene / dehydrated acetic acid (75 / 25 mass%) was added to 10 g of the ionomer resin compositions that were obtained in the examples and the comparative examples, and the mixtures were reacted for 2 hours at 100°C. Afterward, the reaction solutions were pressure-filtered by using a membrane filter (0.45 $\mu$m pore size), and the filtered-out solids were vacuum-dried for 8 hours or longer at 60°C to remove the solvent that was contained therein. The inorganic substance was quantified from the dried solid content that was obtained.

[Average Particle Size of Inorganic Substance]

The average particle size of the inorganic substance that has a hydroxyl group and/or an amide group was found by measuring the particle size distributions of the precipitated particulate resins by using a laser diffraction/scattering device for measuring particle size distribution (made by Horiba; product name: LA-950). The mode system (modal particle size) that is obtained from a graph that is obtained by plotting particle size ($\mu$m) on the horizontal axis and frequency (%) on the vertical axis was made to be the average particle size.

[Transparency when Annealed (Annealing Haze)]

The resin sheets that were obtained in the examples and the comparative examples were sandwiched between two sheets of float glass of a thickness of 2.7 mm. A vacuum laminator (1522N, made by Nisshinbo Mechatronics) was used; the pressure in the vacuum laminator was reduced for 1 minute at 100°C, and pressing was performed for 5 minutes at 30 kPa while holding the reduced-pressure state and the temperature. A temporarily bonded body was obtained. The obtained temporarily bonded body was placed in an autoclave and processed for 30 minutes at 140°C and 1.2 MPa to obtain laminated glass of a size of 30 cm squared.
The laminated glass that was obtained by the above method was heated to 140°C and then annealed to 23°C at a rate of 0.1 °C/minute. The haze of the laminated glass following the annealing operation was measured using the haze meter HZ-1 (made by Suga Test Instruments), the measurement being according to JIS K 7136 : 2000.

[Coloration Resistance (YI)]

The resin sheets that were obtained in the examples and the comparative examples were measured by using the colorimeter "ZE-2000" (product name) made by Nippon Denshoku Industries, the measurement being according to JIS Z 8722. The value of the yellowness that was calculated on the basis of the obtained measurement value, the calculation being according to JIS K 7373, was made to be the yellow index (YI).

[Creep Resistance]

The resin sheets that were obtained in the examples and the comparative examples were left standing for one week or longer in a 23°C, 50% RH atmosphere. Afterward, a 40 mm tall × 5 mm wide test piece was cut out. The long-term relaxation modulus was found, by using a dynamic viscoelastic measurement device made by UBM, from a composite curve at a reference temperature of 50°C that is obtained by dynamic viscoelastic measurement and the time-temperature superposition principle (master curve), and the value was made to be the indicator of creep resistance.
The dynamic viscoelastic measurement was according to a method that conforms to JIS K 0129 : 2005. Tensile measurement was performed under conditions of a temperature of 50 to 100°C and frequencies of 0.1, 0.5, 1, 5, 10, 50, and 100 Hz. The master curve was created based on the obtained measurement results of the storage modulus, with the reference temperature as 50°C by using the temperature-time superposition principle. The storage modulus ($E'(t1)$) at the frequency $4.0 \times 10^{-7}$ Hz and the loss modulus ($E''(t2)$) at the frequency $2.0 \times 10^{-7}$ Hz were read. Poisson's ratio was fixed at 0.5, and the relaxation modulus G(t) at 50°C after $2.6 \times 10^6$ seconds was found according to formula (A) below.

$$G(t) = E'(t1)/3 - 0.4 \times E''(t2)/3 \ ... \ (A)$$

The series of calculations was performed using the calculation software "Rheostation" (UBM) that accompanies the dynamic viscoelastic measurement device that is made by UBM.

[Raw-Material Resin]

The methyl methacrylate (MMA) modification amount or ethyl acrylate (EA) modification amount and the melt flow rate (MFR) of each ethylene-(meth)acrylic acid ester copolymer (X) that was used as the raw material of the ionomer resins in the examples and the comparative examples are indicated in Table 1.

For example, "Acryft" (registered trademark) WH401F, made by Sumitomo Chemical, can be used as EMMA1, and Rexpearl (registered trademark) A4250, made by Japan Polyethylene, can be used as EEA1. The MFR of the raw-material resins that were used in the examples and the comparative examples were measured by melting each resin in a cylinder; extruding the melted resin from a die with a nominal pore size of 2.095 mm that is disposed in the bottom of the cylinder, the extrusion being under load conditions of 190°C and 2.16 kg; and measuring the amount of resin that is extruded per 10-minute period (g / 10 minutes).

[Table1]

| | MMA or EA modification a mount | | MFR |
|---|---|---|---|
| | Mass% | Mol% | g / 10 minutes |
| EMMA 1 | 20 | 6.5 | 20 |
| EMMA2 | 25 | 8.5 | 7 |
| EMMA3 | 25 | 8.5 | 150 |
| EMMA4 | 18 | 5.8 | 7 |
| EEA1 | 25 | 8.5 | 5 |

[Example 1]

(Ionomer resin composition)

100 parts by mass of EMMA2 in Table 1 was introduced into a reaction tank, and 233 parts by mass of toluene and 0.002 parts by mass of 3,5-di-tert-butyl-4-hydroxybenzaldehyde were added thereto. The mixture was stirred at 60°C under 0.02 MPa of pressurization to dissolve EMMA2. 100 parts by mass of a methanol solution of sodium hydroxide (20 mass%) was added to the obtained solution. The mixture was stirred for 4 hours at 100°C to saponify EMMA2, and a portion of the methyl methacrylate units was converted into sodium methacrylate units. Next, the solution was cooled to 50°C. 83 parts by mass of hydrochloric acid (20 mass%) was then added into the reaction solution. The mixture was stirred for 1 hour at 50°C to convert a portion of the sodium methacrylate units into methacrylic acid, and a solution of a crude ionomer resin composition that includes a crude ionomer resin and 3,5-di-tert-butyl-4-hydroxybenzaldehyde was obtained.

The obtained solution was diluted by adding a mixed solvent of toluene/methanol (75 / 25 mass%) to the solution to make the concentration of the crude ionomer resin be 10 mass%. Next, the obtained diluted solution of the crude ionomer resin composition was adjusted to be 34°C. Afterward, 430 parts by mass of 34°C methanol was added to 100 parts by mass of the diluted solution of the crude ionomer resin composition to precipitate the resin composition as granules. Next, the obtained granular resin composition was filtered, and afterward, 100 parts by mass of the filtered granular resin composition and 600 parts by mass of a mixed solvent of water/methanol (50 / 50 mass%) were mixed. The slurry that was obtained by the mixing was stirred for 1 hour at 40°C. Afterward, the granular resin composition was filtered out at room temperature. The granular resin composition was washed an additional three times by the water/methanol mixed solvent, and a washed granular ionomer resin composition was obtained. The obtained granular ionomer resin composition was vacuum-dried for 8 hours or longer. Afterward, a batch-type melt kneader was used to perform melt kneading for 3 minutes at 210°C and a rotation speed of 90 rpm to obtain an ionomer resin composition.

(Resin sheet)

The melt-kneaded ionomer resin composition that was obtained was compression-molded for 5 minutes by being heated to 210°C under 4.9 MPa (50 kgf/cm$^2$) of pressure to obtain a resin sheet of a thickness of 0.8 mm.

[Example 2]

An ionomer resin composition and a resin sheet were obtained in the same manner as Example 1 other than using EMMA3 instead of EMMA2 and adding 0.005 parts by mass of stearamide instead of 3,5-di-tert-butyl-4-hydroxybenzaldehyde.

[Example 3]

An ionomer resin composition and a resin sheet were obtained in the same manner as Example 1 other than using EMMA3 instead of EMMA2 and adding 0. 02 parts by mass of silica of an average particle size of 0. 04 μm (Aerosil 200, made by Nippon Aerosil) instead of 3,5-di-tert-butyl-4-hydroxybenzaldehyde.

[Example 4]

An ionomer resin composition and a resin sheet were obtained in the same manner as Example 1 other than using EMMA3 instead of EMMA2 and adding 0.003 parts by mass of 6-tert-butyl-2,4-xylenol instead of 3,5-di-tert-butyl-4-hydroxybenzaldehyde immediately after adding 100 parts by mass of a methanol solution of sodium hydroxide (20 mass%) (saponification step) instead of the step of dissolving EMMA3 (dissolution step).

[Example 5]

An ionomer resin composition and a resin sheet were obtained in the same manner as Example 1 other than using EEA1 instead of EMMA2 and adding 0.004 parts by mass of 3,5-di-tert-butyl-4-hydroxybenzaldehyde immediately after adding 83 parts by mass of hydrochloric acid (20 mass%) (demetallization step) instead of the dissolution step.

[Example 6]

An ionomer resin composition and a resin sheet were obtained in the same manner as Example 1 other than using EMMA1 instead of EMMA2, adding 0.008 parts by mass of 2,6-di-tert-butyl-p-cresol instead of 3,5-di-tert-butyl-4-hydroxybenzaldehyde, and changing the adding amount of a methanol solution of sodium hydroxide (20 mass%) to 80 parts by mass and the adding amount of hydrochloric acid (20 mass%) to 66 parts by mass.

[Example 7]

An ionomer resin composition and a resin sheet were obtained in the same manner as Example 1 other than using EMMA3 instead of EMMA2 and adding 0. 02 parts by mass of ethylene bis stearamide instead of 3,5-di-tert-butyl-4-hydroxybenzaldehyde.

[Example 8]

An ionomer resin composition and a resin sheet were obtained in the same manner as Example 1 other than using EMMA3 instead of EMMA2 and adding 0.0003 parts by mass of 3,3',5,5'-tetra-tert-butyl-4,4'-stilbenequinone instead of 3,5-di-tert-butyl-4-hydroxybenzaldehyde at the demetallization step instead of the dissolution step.

[Example 9]

An ionomer resin composition and a resin sheet were obtained in the same manner as Example 1 other than using EMMA3 instead of EMMA2 and adding 0. 0005 parts by mass of 1,4-benzoquinone instead of 3,5-di-tert-butyl-4-hydroxybenzaldehyde at the demetallization step instead of the dissolution step.

[Example 10]

An ionomer resin composition and a resin sheet were obtained in the same manner as Example 1 other than using EMMA3 instead of EMMA2 and adding 0. 0002 parts by mass of 3,3',5,5'-tetra-tert-butyl-4,4'-diphenoquinone instead of 3,5-di-tert-butyl-4-hydroxybenzaldehyde at the demetallization step instead of the dissolution step.

[Comparative Example 1]

An ionomer resin composition and a resin sheet were obtained in the same manner as Example 6 other than not adding 2,6-di-tert-butyl-p-cresol.

[Comparative Example 2]

An ionomer resin composition and a resin sheet were obtained in the same manner as Example 1 other than making the adding amount of 3,5-di-tert-butyl-4-hydroxybenzaldehyde be 0.35 parts by mass.

[Comparative Example 3]

An ionomer resin composition and a resin sheet were obtained in the same manner as Example 4 other than adding 0.4 parts by mass of 4-methoxyphenol instead of 6-tert-butyl-2,4-xylenol immediately after adding 100 parts by mass of a methanol solution of sodium chloride (20 mass%).

[Comparative Example 4]

An ionomer resin composition and a resin sheet were obtained in the same manner as Example 1 other than using EMMA4 instead of EMMA2, adding 0. 008 parts by mass of talc of an average particle size of 0. 1 $\mu$m instead of 3,5-di-tert-butyl-4-hydroxybenzaldehyde, and changing the adding amount of a methanol solution of sodium hydroxide (20 mass%) to 72 parts by mass and the adding amount of hydrochloric acid (20 mass%) to 59 parts by mass.

The transparency when annealed, the coloration resistance, and the creep resistance of the resin sheets that were obtained in the examples and the comparative examples were evaluated according to the methods above. The results are indicated in Table 2. The ionomer resin compositions that were obtained in the examples and the comparative examples were analyzed according to the methods above. The results are indicated in Table 2. "Unit (A)," "Unit (B)," and "Unit (C)" in Table 2 respectively represent the (meth)acrylic acid unit (A), the neutralized (meth)acrylic acid unit (B), and the (meth)acrylic acid ester unit (D), and the content of each unit is based on all the monomer units that constitute the ionomer resin.

[Table 2]

| | Production method | | | | Ionomer resin composition | | | | | | Evaluation results | | |
|---|---|---|---|---|---|---|---|---|---|---|---|---|---|
| | | Component Y | | | Ionomer resin | | | | Component Y | | Transparency | Coloration re-sistance | Creep resist-ance |
| | Raw-mate-rial resin | Step at which com-ponent is added | Type' | Adding amount | Composition of ionomer resin (Content of each unit) | | | | Type' | Content | Annealing Haze | YI | Long-term re-laxation mod-ulus |
| | | | | | Unit (A) | Unit (B) | Unit (D) | (A)+(B)+(D) | | | | | |
| | | | | Parts by mass | mol% | mol% | mol% | mol% | | Mass ppm | % | - | MPa |
| Example 1 | EMMA2 | Dissolution | A | 0.002 | 6.7 | 1.7 | 0.1 | 8.5 | A | 9 | 1.0 | 0.4 | 0.61 |
| Example 2 | EMMA3 | Dissolution | B | 0.005 | 6.7 | 1.7 | 0.1 | 8.5 | B | 30 | 1.2 | 0.3 | 0.48 |
| Example 3 | EMMA3 | Dissolution | C | 0.020 | 6.7 | 1.7 | 0.1 | 8.5 | C | 90 | 0.9 | 0.5 | 0.35 |
| Example 4 | EMMA3 | Saponification | D | 0.003 | 6.7 | 1.7 | 0.1 | 8.5 | D | 15 | 1.5 | 0.5 | 0.51 |
| Example 5 | EEA1 | Demetallization | A | 0.004 | 6.7 | 1.7 | 0.1 | 8.5 | A | 26 | 1.3 | 0.6 | 1.2 |
| Example 6 | EMMA1 | Dissolution | E | 0.008 | 5.0 | 1.3 | 0.2 | 6.5 | E | 53 | 2.7 | 0.3 | 1.0 |
| Example 7 | EMMA3 | Dissolution | F | 0.020 | 6.7 | 1.7 | 0.1 | 8.5 | F | 80 | 1.1 | 0.2 | 0.65 |
| Example 8 | EMMA3 | Demetallization | G | 0.0003 | 6.7 | 1.7 | 0.1 | 8.5 | G | 1 | 1.3 | 0.3 | 0.44 |
| Example 9 | EMMA3 | Demetallization | H | 0.0005 | 6.7 | 1.7 | 0.1 | 8.5 | H | 3 | 1.4 | 0.3 | 0.45 |
| Example 10 | EMMA3 | Demetallization | I | 0.0002 | 6.7 | 1.7 | 0.1 | 8.5 | I | 1 | 1.2 | 0.3 | 0.46 |
| Comparative example 1 | EMMA1 | - | - | - | 5.0 | 1.3 | 0.2 | 6.5 | - | 0 | 5.3 | 0.3 | 1.1 |
| Comparative example 2 | EMMA2 | Dissolution | A | 0.350 | 6.7 | 1.7 | 0.1 | 8.5 | A | 2,100 | 0.9 | 2.5 | 0.20 |
| Comparative example 3 | EMMA3 | Saponification | J | 0.400 | 6.7 | 1.7 | 0.1 | 8.5 | J | 2,400 | 0.8 | 3.1 | 0.16 |
| Comparative example 4 | EMMA4 | Dissolution | K | 0.008 | 4.5 | 1.2 | 0.1 | 5.8 | K | 60 | 7.5 | 0.3 | 1.3 |

'A: 3,5-di-tert-Butyl-4-hydroxybenzaldehyde   F: Ethylene bis stearamide
B: Stearamide   G: 3,3',5,5'-tetra-tert-Butyl-4,4'-stilbenequinone

EP 4 397 708 A1

(continued)

| | Production method | | | | Ionomer resin composition | | | | | | Evaluation results | | |
|---|---|---|---|---|---|---|---|---|---|---|---|---|---|
| | | Component Y | | | Ionomer resin | | | | Component Y | | Transparency | Coloration re-sistance | Creep resist-ance |
| Raw-mate-rial resin | Step at which com-ponent is added | Type' | Adding amount | Composition of ionomer resin (Content of each unit) | | | | Type' | Content | Annealing Haze | YI | Long-term re-laxation mod-ulus |
| | | | | Unit (A) | Unit (B) | Unit (D) | (A)+(B)+(D) | | | | | |
| | | | Parts by mass | mol% | mol% | mol% | mol% | | Mass ppm | % | - | MPa |
| C: Silica | | | | | | H: 1,4-Benzoquinone | | | | | | | |
| D: 6-tert-Butyl-2,4-xylenol | | | | | | I: 3,3', 5,5'-tetra-tert-Butyl-4,4'-di phenoqui none | | | | | | | |
| E: 2,6-di-tert-Butyl-p-cresol | | | | | | J: 4-Methoxyphenol | | | | | | | |
| | | | | | | K: Talc | | | | | | | |

EP 4 397 708 A1

As indicated in Table 2, it was confirmed that the resin sheets that are composed of the ionomer resin compositions that are obtained in the examples have less coloration after melt-kneading, superior transparency when annealed, and superior creep resistance compared to the resin sheets that are composed of the ionomer resin compositions that are obtained in the comparative examples. Therefore, the ionomer resin composition of the present invention can form a resin sheet that has excellent transparency, coloration resistance, and creep resistance.

**Claims**

1. An ionomer resin composition comprising:

   an ionomer resin comprising a (meth)acrylic acid unit (A), a neutralized (meth)acrylic acid unit (B), and an ethylene unit (C); and
   a component Y selected from the group of a compound having a hydroxyl group and/or an amide group, a modified product thereof, and a mixture thereof;
   the total content of unit (A) and unit (B) being 6 to 10 mol% on the basis of all monomer units constituting the ionomer resin, and
   the content of component Y being 0.01 to 2,000 mass ppm.

2. The ionomer resin composition of claim 1, wherein the ionomer resin further comprises a (meth)acrylic acid ester unit (D), the total content of unit (A), unit (B), and unit (D) being 6 to 10 mol% on the basis of all the monomer units constituting the ionomer resin.

3. The ionomer resin composition of claim 1 or 2, wherein the compound having a hydroxyl group and/or an amide group is at least one compound selected from among a phenol compound, a fatty acid amide, an inorganic substance having a hydroxyl group or an amide group, and a modified product thereof.

4. The ionomer resin composition of claim 3, wherein the total content of the phenol compound and the modified product thereof is 0.01 to 100 mass ppm, the total content of the fatty acid amide and the modified product thereof is 0.01 to 2,000 mass ppm, and/or the content of the inorganic substance that has a hydroxyl group and/or an amide group is 0.01 to 2,000 mass ppm.

5. The ionomer resin composition of claim 3 or 4, wherein the phenol compound is selected from among 6-tert-butyl-2,4-xylenol, 4-methoxyphenol, 1,4-dihydroxybenzene, 3,5-di-tert-butyl-4-hydroxybenzaldehyde, and 2,6-di-tert-butyl-p-cresol;

   the fatty acid amide is selected from among erucamide, oleamide, stearamide, behenamide, ethylene bis stearamide, ethylene bis capramide, and ethylene bis oleamide; and/or
   the inorganic substance having a hydroxyl group and/or an amide group is selected from among talc, modified calcium carbonate, silica, modified alumina, and kaolin.

6. A method for producing the ionomer resin composition of any one of claims 1 to 5, the method comprising:

   i) a step of dissolving an ethylene-(meth)acrylic acid ester copolymer in an organic solvent,
   ii) a step of saponifying the copolymer, and
   iii) a step of demetallizing at least a portion of the saponification product obtained in step ii),

   at least one step among steps i) to iii) being performed in the presence of $1.0 \times 10^{-6}$ to 1.0 parts by mass of the component Y relative to 100 parts by mass of the copolymer.

7. A resin sheet comprising one or more layers which comprise the ionomer resin composition of any one of claims 1 to 5.

8. A laminated glass interlayer film comprising the resin sheet of claim 7.

9. Laminated glass comprising two glass sheets and the laminated glass interlayer film of claim 8, disposed between the two glass sheets.

## INTERNATIONAL SEARCH REPORT

| International application No. |
| --- |
| **PCT/JP2022/032387** |

**A. CLASSIFICATION OF SUBJECT MATTER**

*C08L 33/02*(2006.01)i; *C03C 27/12*(2006.01)i; *C08F 220/06*(2006.01)i; *C08J 5/18*(2006.01)i; *C08K 5/05*(2006.01)i; *C08K 5/20*(2006.01)i

FI: C08L33/02; C08F220/06; C08K5/05; C08K5/20; C03C27/12 F; C08J5/18 CES

According to International Patent Classification (IPC) or to both national classification and IPC

**B. FIELDS SEARCHED**

Minimum documentation searched (classification system followed by classification symbols)

C08L33/02; C03C27/12; C08F220/06; C08J5/18; C08K5/05; C08K5/20

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2020-138738 A (DOW MITSUI POLYCHEMICALS CO LTD) 03 September 2020 (2020-09-03) claims, paragraphs [0045]-[0046], examples | 1-5, 7 |
| A | | 6 |
| X | JP 7-316368 A (DU PONT MITSUI POLYCHEM CO LTD) 05 December 1995 (1995-12-05) claims, paragraphs [0006]-[0007], [0016]-[0021], examples | 1-5, 7 |
| Y | | 8-9 |
| A | | 6 |
| X | JP 2019-77582 A (KURARAY CO) 23 May 2019 (2019-05-23) claims, paragraphs [0023]-[0025], [0055], [0095]-[0098], examples | 1-4, 7-9 |
| Y | | 8-9 |
| A | | 6 |

☑ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **18 October 2022** | **01 November 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| International application No. |
| --- |
| **PCT/JP2022/032387** |

**C.    DOCUMENTS CONSIDERED TO BE RELEVANT**

| Category* | Citation of document, with indication, where appropriate, of the relevant passages | Relevant to claim No. |
| --- | --- | --- |
| Y | WO 2020/189335 A1 (DOW MITSUI POLYCHEMICALS CO LTD) 24 September 2020 (2020-09-24)<br>     claims, examples | 8-9 |

Form PCT/ISA/210 (second sheet) (January 2015)

INTERNATIONAL SEARCH REPORT
Information on patent family members

| | International application No. |
|---|---|
| | **PCT/JP2022/032387** |

| Patent document cited in search report | | | Publication date (day/month/year) | Patent family member(s) | | | Publication date (day/month/year) |
|---|---|---|---|---|---|---|---|
| JP | 2020-138738 | A | 03 September 2020 | (Family: none) | | | |
| JP | 7-316368 | A | 05 December 1995 | (Family: none) | | | |
| JP | 2019-77582 | A | 23 May 2019 | (Family: none) | | | |
| WO | 2020/189335 | A1 | 24 September 2020 | EP claims, examples | 3942991 | A1 | |

Form PCT/ISA/210 (patent family annex) (January 2015)

**EP 4 397 708 A1**

**REFERENCES CITED IN THE DESCRIPTION**

**Patent documents cited in the description**

- JP 2021139822 A
- US 6432522 B
- JP 2017519083 A
- US 8399096 B
- US 20130274424 A
- JP 2006233059 A
- JP 2007084743 A
- EP 1235683 B1